(19) Europäisches Patentamt / European Patent Office / Office européen des brevets

(11) EP 3 919 549 A1

(12) **EUROPEAN PATENT APPLICATION**
published in accordance with Art. 153(4) EPC

(43) Date of publication:
**08.12.2021 Bulletin 2021/49**

(21) Application number: **20749780.1**

(22) Date of filing: **28.01.2020**

(51) Int Cl.:
*C08G 73/10* (2006.01) *C09D 5/25* (2006.01)
*C09D 179/08* (2006.01) *H01B 3/30* (2006.01)
*C08L 79/08* (2006.01)

(86) International application number:
**PCT/JP2020/002988**

(87) International publication number:
**WO 2020/158736 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2019 JP 2019013345**

(71) Applicant: **Mitsubishi Chemical Corporation**
**Chiyoda-ku**
**Tokyo 100-8251 (JP)**

(72) Inventors:
- **ECHIGO, Yu**
  **Tokyo 100-8251 (JP)**
- **AOKI, Dai**
  **Tokyo 100-8251 (JP)**
- **SUGIYAMA, Jiro**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **COMPOSITION AND METAL-INSULATING COATING MATERIAL**

(57) A composition containing a solvent and a polyimide resin precursor and/or polyimide resin, wherein the polyimide resin precursor and/or polyimide resin includes a compound represented by Formula (0) below and/or a compound represented by Formula (0') below, and a compound including a functional group that reacts with a terminally cyclized product of the compound represented by Formula (0) below and/or the compound represented by Formula (0') below.

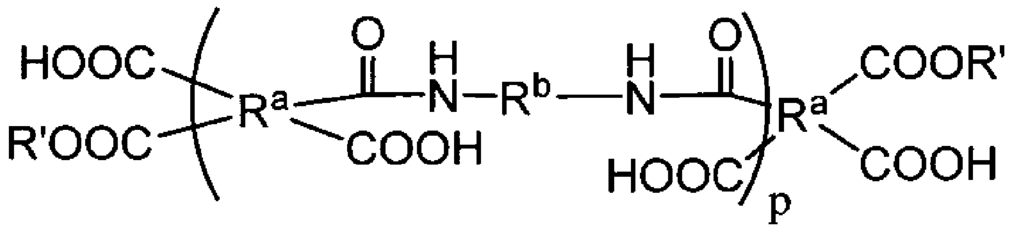

(0)

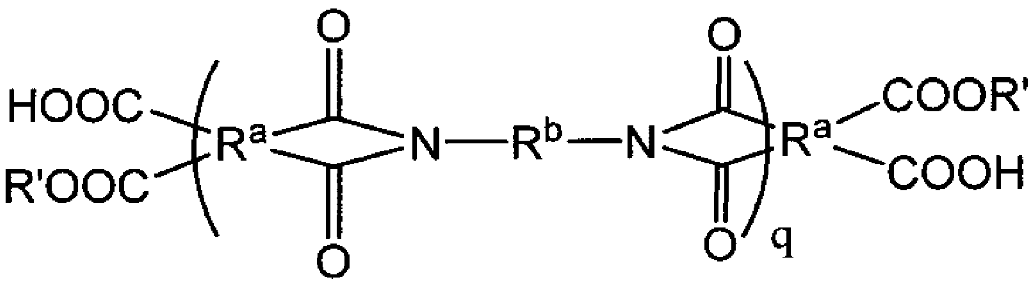

(0')

EP 3 919 549 A1

In Formula (0) and Formula (0') above, R' each independently represent a hydrogen atom or an alkyl group. $R^a$ represents a tetracarboxylic acid residue. $R^b$ represents a diamine residue. $R^a$ and/or $R^b$ includes one linking group including an active hydrogen and/or one or more and four or less substituents including an active hydrogen. p and q represent given integers.

## Description

### Technical Field

The present invention relates to a composition that has a highly insulating property, high heat resistance, bending resistance, and abrasion resistance, and that further has high workability and high adhesion; a metal insulating cover material using the composition; and a method for producing the metal insulating cover material.

### Background Art

In the fields of electricity, electronic components, transportation equipment, space, aircraft, and the like, polyimides, which are excellent in terms of heat resistance, electrical insulating properties, abrasion resistance, chemical resistance, mechanical properties, and the like, have been widely used.

For insulating cover films, which are the typical application of polyimides, because the final products have come to have higher performance, there has been a demand for insulating resins having higher performance.

For example, insulating cover materials of various electric wires used for automobiles need to have high heat resistance for addressing increased power of automobiles and to have high flexibility and high mechanical strength for addressing tighter bending of electric wires and rubbing between electric wires due to increased density of wires.

On the other hand, for flexible printed circuit substrates (FPCs), with reduction in the size of devices, high bendability is required for installation within the device housings. Thus, insulating cover films need to have mechanical strength for providing sufficient durability, and flexibility for preventing breakage during bending. Furthermore, FPCs, which are subjected to a reflow soldering step during mounting of electronic components, need to have heat resistance against heat of the reflow soldering step.

In order to try to meet such demands for higher performance, a polyimide may be provided to have increased molecular weight; however, the resultant polyimide solution used for forming insulating cover films has high viscosity, to cause problems such as variations in cover film thickness and large amounts of residual solvents remaining in cover films. In order to adjust the viscosity for providing high coatability, the concentration of the polyimide may be lowered; in this case, one-time coating does not provide thick films. In order to increase the film thickness, recoating becomes necessary, which results in a decrease in productivity.

In order to address such problems, addition of isocyanate to a polyimide resin solution has been developed to lower the viscosity while the mechanical properties are maintained (Patent Literature 1). In addition, an enameled wire using, as a cover material, a polyimide resin having higher heat resistance than polyamide-imide resins has been developed (Patent Literature 2).

PTL 1: JP9-137118A
PTL 2: JP2011-29100A

In PTL 1, when the isocyanate reacts with a substance other than the acid anhydride, bonds other than imide bonds are formed, which results in lowered rigidity of molecular chains and degradation of mechanical properties.

In PTL 2, ordinarily, the polyimide resin is provided with a molecular skeleton having a rigid structure to achieve increased heat resistance. Thus, the rigid molecular skeleton provides increased abrasion resistance (increased elastic modulus), but causes lowering of molecular mobility and lowering of flexibility, resulting in poor bending resistance.

### Summary of Invention

An object of the present invention is to provide a composition that is highly electrically insulating, has high heat resistance and bending resistance, and has high abrasion resistance, high workability, and high adhesion; and a metal insulating cover material using this composition.

The inventors of the present invention have found that use of a polyimide resin and/or precursor thereof including a compound represented by Formula (0) below and/or a compound represented by Formula (0’) below, and a compound including a functional group that reacts with a terminally cyclized product of the compound represented by Formula (0) below and/or the compound represented by Formula (0’) below (hereafter, the polyimide resin and/or precursor thereof may be collectively referred to as "polyimide resin species") provides an insulating composition in which heat resistance, bending resistance, and abrasion resistance are maintained and, in addition, high workability and high adhesion are achieved. Thus, they have arrived at the present invention.

The present invention encompasses the following embodiments [1] to [11].

[1] A composition comprising a solvent and a polyimide resin precursor and/or polyimide resin, wherein the polyimide resin precursor and/or polyimide resin includes a compound represented by Formula (0) below and/or a compound represented by Formula (0') below, and a compound including a functional group that reacts with a terminally cyclized product of the compound represented by Formula (0) below and/or the compound represented by Formula (0') below.

[Chem. 1]

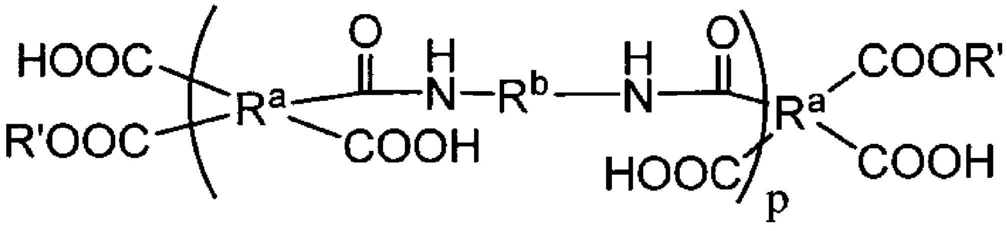

(0)

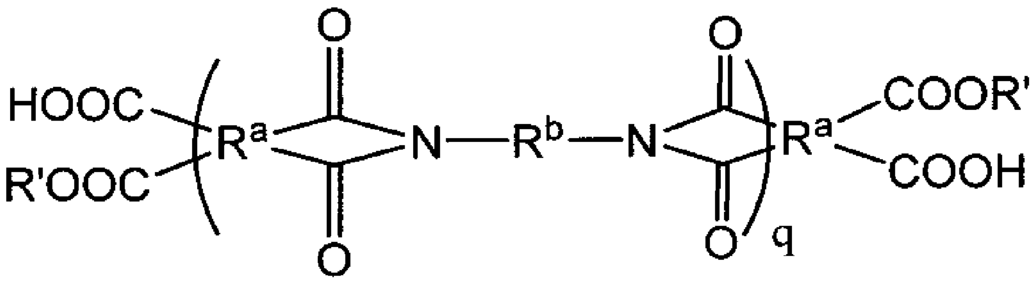

(0')

In Formula (0) and Formula (0') above, R' each independently represent a hydrogen atom or an alkyl group. $R^a$ represents a tetracarboxylic acid residue. $R^b$ represents a diamine residue. $R^a$ and/or $R^b$ includes one linking group including an active hydrogen and/or one or more and four or less substituents including an active hydrogen. p and q represent given integers.

[2] The composition according to [1], wherein the solvent has a boiling point of 120°C or more.

[3] The composition according to [1] or [2], wherein a concentration of the polyimide resin precursor and/or polyimide resin in the composition is 15 wt% or more and 40 wt% or less.

[4] The composition according to any one of [1] to [3], wherein the polyimide resin precursor and/or polyimide resin includes at least one of a structural unit represented by Formula (1) below or a structural unit represented by Formula (2) below:

[Chem. 2]

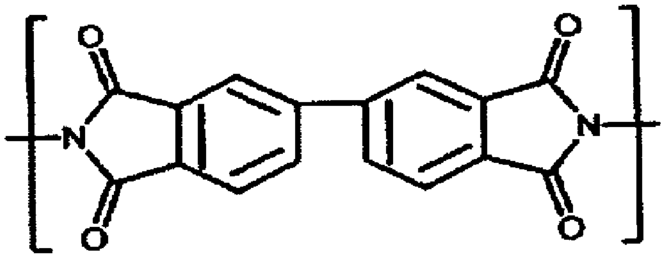

(1)

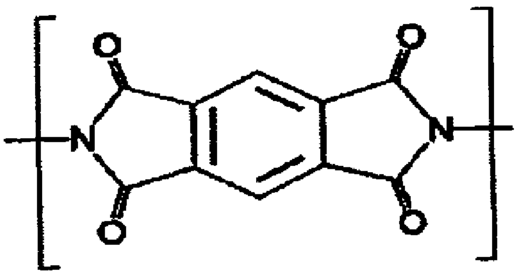

(2)

[5] The composition according to any one of [1] to [4], wherein the polyimide resin precursor and/or polyimide resin includes a structural unit represented by Formula (3) below:

[Chem. 3]

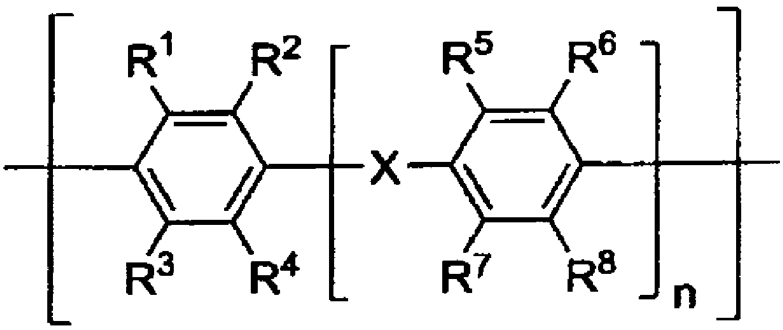

(3)

In Formula (3) above, $R^1$ to $R^8$ may be the same or different, and are each a hydrogen atom, an alkyl group having 1 or more and 4 or less carbon atoms, a fluoroalkyl group having 1 or more and 4 or less carbon atoms, or a hydroxy group. X is a direct bond, an oxygen atom, a sulfur atom, an alkylene group having 1 or more and 4 or less carbon atoms, a sulfonyl group, a sulfinyl group, a sulfide group, a carbonyl group, an amide group, an ester group, or a secondary amino group. n is an integer of 0 to 4.

[6] The composition according to any one of [1] to [5], wherein the linking group including an active hydrogen or the substituents including an active hydrogen are a structure selected from the group consisting of -NH-, =NH, - C(O)NH-, -NHC(O)O-, -NHC(O)NH-, -NHC(S)NH-, $-NH_2$, -OH, - C(O)OH, -SH, -C(O)N(OH)-, and -C(O)SH.

[7] The composition according to [6], wherein the linking group including an active hydrogen or the substituents including an active hydrogen are a structure selected from the group consisting of -C(O)NH-, -NHC(O)NH-, and -OH.

[8] The composition according to any one of [1] to [7], wherein a baked film of the composition has a glass transition temperature (Tg) of 250°C or more and 400°C or less.

[9] The composition according to any one of [1] to [8], wherein the composition has a viscosity of 10,000 cP or less.

[10] A metal insulating cover material comprising a resin layer formed from the composition according to any one of [1] to [9].

[11] A method for producing a metal insulating cover material, the method comprising a step of covering metal with the composition according to any one of [1] to [9].

The present invention also encompasses the following embodiments <1> to <8>.

<1> A resin composition for an insulating cover material, the composition including a solvent and a polyimide resin precursor and/or polyimide resin, wherein the polyimide resin precursor and/or polyimide resin includes a compound represented by Formula (0) below and/or a compound represented by Formula (0') below, and a compound including a functional group that reacts with a terminally cyclized product of the compound represented by Formula (0) below and/or the compound represented by Formula (0') below, a concentration of the polyimide resin precursor and/or polyimide resin in the composition is 15 wt% or more and less than 30 wt%, and the composition has a viscosity of 10,000 cP or less.

[Chem. 4]

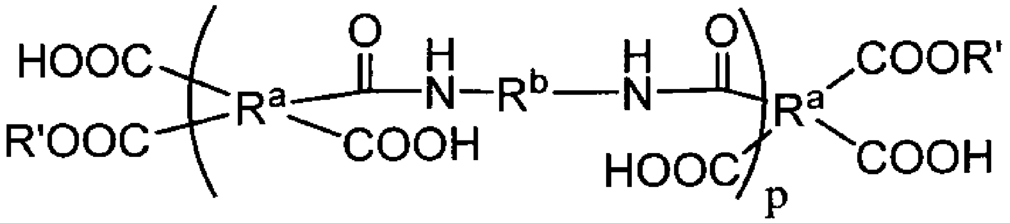

(0)

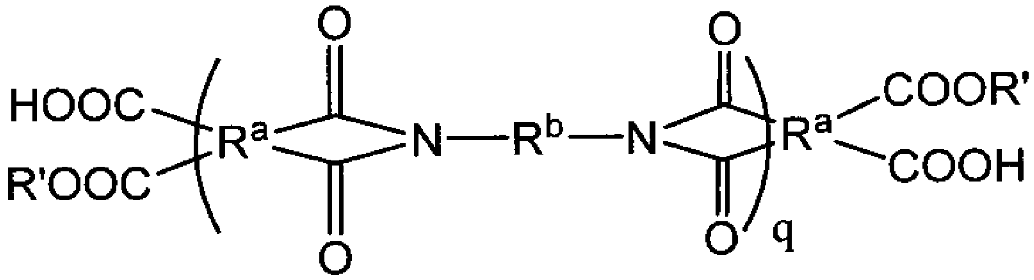

(0' )

In Formula (0) and Formula (0') above, R' each independently represent a hydrogen atom or an alkyl group. $R^a$ represents a tetracarboxylic acid residue. $R^b$ represents a diamine residue. p and q represent given integers.

<2> The resin composition for an insulating cover material according to <1>, wherein the polyimide resin precursor and/or polyimide resin includes at least one of a structural unit represented by Formula (1) below or a structural unit represented by Formula (2) below.

[Chem. 5]

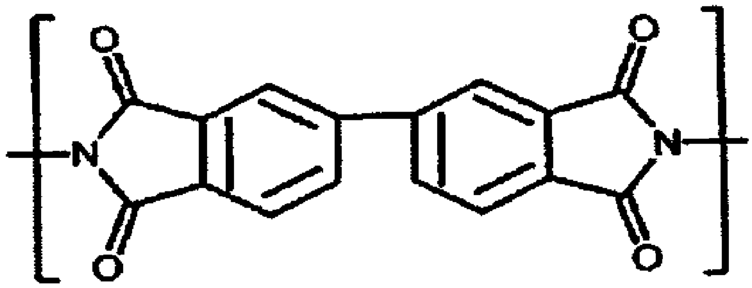

(1)

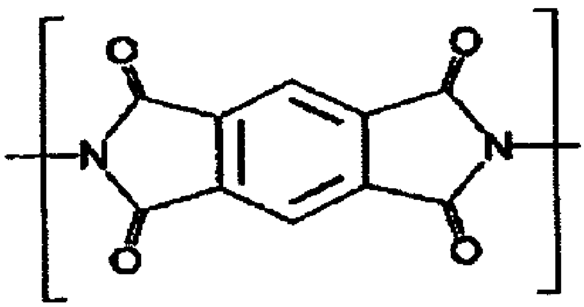

(2)

<3> The resin composition for an insulating cover material according to <1> or <2>, wherein a baked film of the polyimide resin precursor and/or polyimide resin has a glass transition temperature (Tg) of 250°C or more and 400°C or less.

<4> The resin composition for an insulating cover material according to any one of <1> to <3>, wherein the polyimide resin precursor and/or polyimide resin includes a structural unit represented by Formula (3) below.

[Chem. 6]

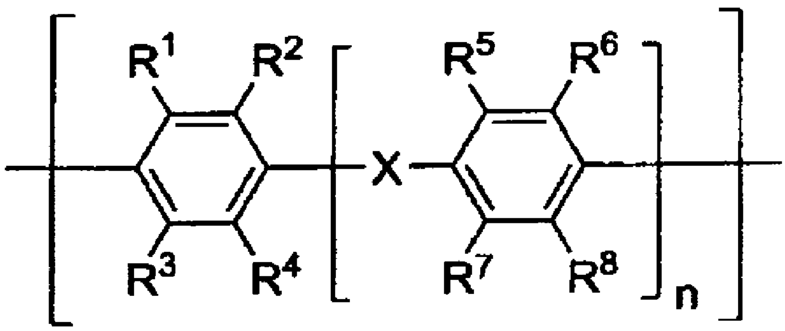

(3)

In Formula (3) above, $R^1$ to $R^8$ may be the same or different, and are each a hydrogen atom, an alkyl group having 1 or more and 4 or less carbon atoms, a fluoroalkyl group having 1 or more and 4 or less carbon atoms, or a hydroxy group. X is a direct bond, an oxygen atom, a sulfur atom, an alkylene group having 1 or more and 4 or less carbon atoms, a sulfonyl group, a sulfinyl group, a sulfide group, a carbonyl group, an amide group, an ester group, or a secondary amino group. n is an integer of 0 to 4.

<5> The resin composition for an insulating cover material according to any one of <1> to <4>, wherein the polyimide resin precursor and/or polyimide resin includes a repeating unit including at least one structure selected from the group consisting of -NH-, =NH, -C(O)NH-, -NHC(O)O-, -NHC(O)NH-, -NHC(S)NH-, $-NH_2$, -OH, -C(O)OH, -SH, -C(O)N(OH)-, -(O)S(O)-, -C(O)-, and -C(O)SH.

<6> The resin composition for an insulating cover material according to <5>, wherein the polyimide resin precursor

and/or polyimide resin includes a repeating unit including a -C(O)NH- structure.
<7> The resin composition for an insulating cover material according to <6>, wherein the -C(O)NH- structure is a structure derived from 4,4'-diaminobenzanilide.
<8> A metal cover material including at least a resin layer including the resin composition for an insulating cover material according to any one of <1> to <7>. Advantageous Effects of Invention

The present invention provides a composition that is highly insulating, has high heat resistance and bending resistance, and that has high abrasion resistance, further high workability, and high adhesion; and a metal insulating cover material using the composition.

Description of Embodiments

Hereinafter, embodiments according to the present invention will be described in detail. The following descriptions are mere examples of embodiments according to the present invention; the present invention without departing from the spirit and scope thereof is not limited to the following descriptions.
In this Description, "a value (or a property value) 'to' a value (or a property value)" is intended to include the values.

[Composition]

A composition according to the present invention is a composition including a solvent and a polyimide resin precursor and/or polyimide resin, wherein the polyimide resin precursor and/or polyimide resin includes a compound represented by Formula (0) below and/or a compound represented by Formula (0') below (hereafter, these may be collectively referred to as "compound (0), (0')"), and a compound including a functional group that reacts with a terminally cyclized product of the compound represented by Formula (0) below and/or the compound represented by Formula (0') below.

[Chem. 7]

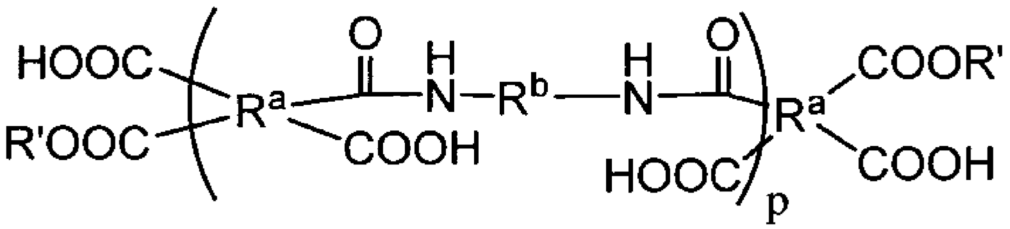

(0)

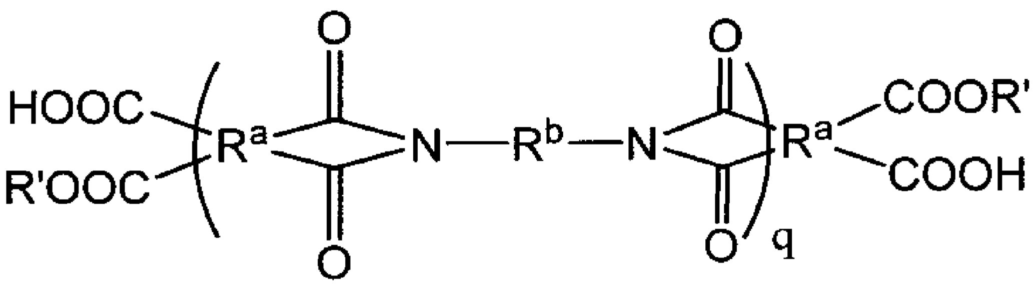

(0' )

In Formula (0) and Formula (0') above,

R' each independently represent a hydrogen atom or an alkyl group.
$R^a$ represents a tetracarboxylic acid residue.
$R^b$ represents a diamine residue.
$R^a$ and/or $R^b$ includes one linking group including an active hydrogen and/or one or more and four or less substituents including an active hydrogen.
p and q represent given integers.

In the following descriptions, "polyimide resin cover" means a polyimide cover obtained by baking a composition according to the present invention.

[Mechanism of action]

The specific reasons why, in an insulating cover material formed from a composition according to the present invention, heat resistance and mechanical properties are maintained, workability and adhesion are improved are not clarified, but are inferred as follows.

During baking of, for example, a coating film of a composition according to the present invention, water and/or alcohol leaves from the ring-opened tetracarboxylic acid terminals of the compound (0), (0’), so that the cyclized acid anhydride reacts with a functional group (reactive group) that reacts with acid anhydride in the composition, to form a polymer. Thus, the composition form has low viscosity, but the baked coating film is inferentially formed of a polymer and has improved heat resistance and mechanical properties. In the case of the polyimide resin precursor, in addition to the reactive group in the composition, cleaved molecules due to an exchange reaction occurring during baking react with the compound (0), (0’) partially. In addition, the composition form has low viscosity, which inferentially enables working at high concentrations and provides high coatability.

$R^a$ and/or $R^b$ includes one linking group including an active hydrogen and/or one or more and four or less substituents including an active hydrogen, so that intermolecular interaction provides appropriate elastic modulus, to achieve both of abrasion resistance and bending resistance.

Furthermore, when the molecular chain includes a large number of polar groups such as functional groups including an active hydrogen, interaction particularly with a charged substrate formed of, for example, metal occurs, to achieve improved adhesion to the conductor.

[Polyimide resin species]

<Formulas (0) and (0’)>

A polyimide resin species according to the present invention includes a compound represented by Formula (0) below and/or a compound represented by Formula (0’) below.

[Chem. 8]

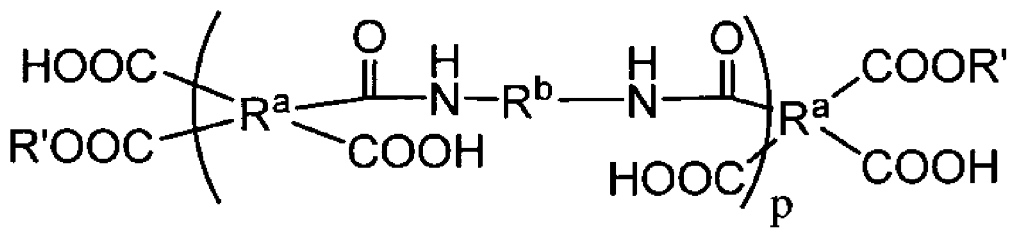

(0)

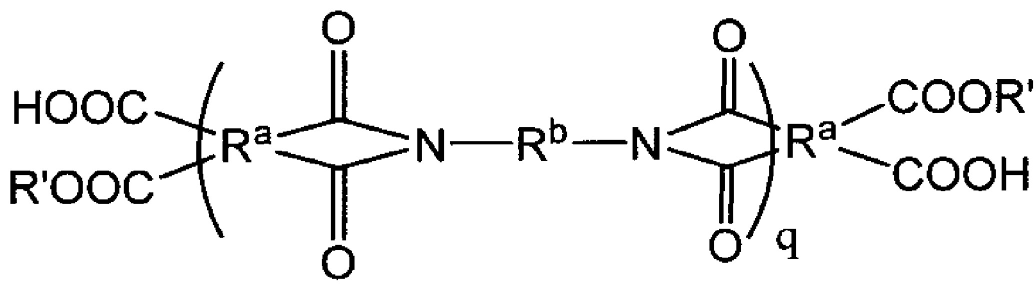

(0’)

In Formula (0) and Formula (0’) above,

R’ each independently represent a hydrogen atom or an alkyl group.
$R^a$ represents a tetracarboxylic acid residue.
$R^b$ represents a diamine residue.

$R^a$ and/or $R^b$ includes one linking group including an active hydrogen and/or one or more and four or more substituents including an active hydrogen.
p and q represent given integers.

(R')

R' each independently represent a hydrogen atom or an alkyl group. The number of carbon atoms of the alkyl group is not particularly limited, and is preferably 10 or less, more preferably 5 or less, still more preferably 2 or less. When the number of carbon atoms is such an upper limit or less, terminal cyclization during baking tends to result in leaving and evaporation of alcohol. The alkyl group may be linear or branched, and may form a ring. The alkyl group may include a substituent.
In each of Formulas (0) and (0'), R' may be the same or different.

(p and q)

p and q represent given integers that are not particularly limited and may be, for example, in ranges of the numbers of repeating in the formulas that correspond to the preferred weight-average molecular weights (Mw) of the polyimide resin precursor and the polyimide resin described later.

(Linking group including active hydrogen and substituent including active hydrogen)

$R^a$ and/or $R^b$ includes one linking group including an active hydrogen and/or one or more and four or less substituents including an active hydrogen.
In the present invention, such a linking group or substituent including an active hydrogen means a group that includes a hydrogen atom bonded to highly electronegative O, N, or S, and forms a hydrogen bond with another such structure.
Of the repeating units in Formulas (0) and (0'), in at least one or more repeating units, $R^a$ and/or $R^b$ includes one linking group including an active hydrogen and/or one or more and four or less substituents including an active hydrogen; all the repeating units may include one linking group including an active hydrogen and/or one or more and four or less substituents including an active hydrogen.
In general, it is known that linking between molecular chains via chemical bonds causes an increase in the elastic modulus. As chemical bonds, there are covalent bonds and noncovalent bonds; use of covalent bonds for linking between molecular chains causes an increase in the elastic modulus (that is, the abrasion resistance is improved), but causes a decrease in the mechanical flexibility (elongation). Thus, the bending resistance is degraded.
In general, when polyimide resin species are baked at certain temperatures or more, the molecular terminals react with other molecules or intramolecular specific moieties or the like to form covalent bonds, which results in degradation of the flexibility. However, when the molecules include repeating units including structures that form noncovalent bonds, the molecules form, together with intermolecular and/or intramolecular specific moieties or the like, noncovalent bonds (hereafter, may be simply referred to as "noncovalent bonds"), and intermolecular interaction provides appropriate elastic modulus, to thereby achieve both of abrasion resistance and bending resistance.
Examples of the noncovalent bonds include ionic bonds, $\pi$-$\pi$ stacking, and hydrogen bonds; preferred are hydrogen bonds because the polyimide resin cover has high heat resistance and also excellent mechanical properties. In the present invention, as a structure that forms a hydrogen bond, because of considerable exertion of this effect, the above-described linking group and/or substituent including an active hydrogen is introduced into $R^a$ and/or $R^b$.
The linking group including an active hydrogen and the substituent including an active hydrogen are not particularly limited; the linking group including an active hydrogen or the substituent including an active hydrogen may be used alone or both of them may be used in combination.
In particular, because the molecular chain has less twist, so that intermolecular interaction tends to become stronger to provide improved heat resistance or elastic modulus, the linking group including an active hydrogen is preferably included, and the linking group including an active hydrogen alone is more preferably included.
When $R^a$ and/or $R^b$ includes two or more linking groups including an active hydrogen, intermolecular interaction tends to become stronger, which results in poor bending resistance; for this reason, $R^a$ and/or $R^b$ includes one linking group including an active hydrogen.
$R^a$ and/or $R^b$, which includes one or more and four or less substituents including an active hydrogen, preferably includes one or two substituents including an active hydrogen because the molecular chain has an appropriate twist conformation. The substituent including an active hydrogen has an electronegativity depending on the size of the substituent or the inter-substituent distance; when the electronegativity is high and substituents are separated from each other, the number of substituents is preferably large.

The linking group including an active hydrogen and/or substituent including an active hydrogen is included in at least $R^a$ and/or $R^b$ and is not particularly limited, but is preferably included in $R^b$ from the viewpoint of ease of polymerization or production stability. In addition, in $R^a$ and/or $R^b$, the linking or substitution position of the linking group and/or substituent is also not particularly limited.

Specific examples of the linking group including an active hydrogen and the substituent including an active hydrogen include -NH- (imino bond; may also be referred to as an imino group), =NH (imino group), -C(O)NH- (amide bond; may also be referred to as an amide group), -NHC(O)O-(urethane bond; may also be referred to as a urethane group), -NHC(O)NH- (urea bond; may also be referred to as a urea group), -NHC(S)NH- (thiourea bond; may also be referred to as a thiourea group), $-NH_2$ (amino group), -OH (hydroxy group), -C(O)OH (carboxy group), -SH (thiol group), - C(O)N(OH)- (hydroxyamide group), -SH (thiol group), - C(O)N(OH)- (hydroxyamide group), and -C(O)SH (thiocarboxy group). These linking groups including an active hydrogen and substituents including an active hydrogen are preferred particularly from the viewpoint of heat resistance, abrasion resistance, and bending resistance.

Among the above-described linking groups including an active hydrogen and substituents including an active hydrogen, in particular, preferred are -C(O)NH- (amide bond), -NHC(O)NH- (urea bond), and -OH (hydroxy group); particularly preferred is -C(O)NH- (amide bond) from the viewpoint of strongly exerting the above-described introduction effect.

In the polyimide resin species molecule, the content of the linking group including an active hydrogen or substituent including an active hydrogen is not particularly limited, but is preferably as follows.

In the cases of polyimide resin precursors, when a case of a polyimide resin precursor in which all the repeating units include one linking group including an active hydrogen or substituent including an active hydrogen is defined as 100%, the content is ordinarily more than 0%, preferably 1% or more, more preferably 2% or more, still more preferably 5% or more, and is preferably less than 200%, more preferably 100% or less, still more preferably 50% or less.

Also in the cases of polyimide resins, when a case in which all the repeating units include one linking group including an active hydrogen or substituent including an active hydrogen is defined as 100%, the content is ordinarily more than 0%, preferably 1% or more, more preferably 2% or more, still more preferably 5% or more, and is preferably less than 200%, more preferably 100% or less, still more preferably 50% or less.

When the content of the linking group including an active hydrogen or substituent including an active hydrogen satisfies such a range, the resultant polyimide resin cover has better mechanical properties such as tensile elastic modulus and elongation.

The content of the linking group including an active hydrogen or substituent including an active hydrogen in the polyimide resin species molecule can be ordinarily determined by NMR, IR, Raman, titration, or mass spectrometry, for example.

Examples of the method of introducing the linking group including an active hydrogen or substituent including an active hydrogen into $R^a$ and/or $R^b$ include, during production of the polyimide resin species, a method of polymerizing a monomer including one linking group including an active hydrogen and/or one or more and four or less substituents including an active hydrogen (hereafter, may be referred to as "hydrogen-bond-forming monomer"), and a method of causing a polymerization reaction to form one linking group including an active hydrogen and/or one or more and four or less substituents including an active hydrogen; in particular, preferred is the method of polymerizing a hydrogen-bond-forming monomer serving as a production raw material for the polyimide resin species.

Examples of the hydrogen-bond-forming monomer include tetracarboxylic dianhydrides and diamine compounds including one linking group including an active hydrogen and/or one or more and four or less substituents including an active hydrogen.

Specific examples of the diamine compounds include 4,4'-diaminobenzanilide, 4,4'-bis(4-aminobenzamide)-3,3'-dihydroxybiphenyl, 2,2'-bis(3-amino-4-hydroxyphenyl) sulfone, 2,2'-bis(3-amino-4-hydroxyphenyl)propane, 4,4'-diamino-3,3'-dihydroxybiphenyl(3,3'-dihydroxybenzidine), and bis(4-amino-3-carboxyphenyl)methane. These hydrogen-bond-forming monomer species may be used alone or in appropriate combination of two or more thereof in an appropriate ratio.

Of these, in particular, 4,4'-diaminobenzanilide is preferably used from the viewpoint of strongly exerting the introduction effect.

The introduction amount of such a hydrogen-bond-forming monomer is not particularly limited, but is preferably as follows.

In the case of a polyimide resin precursor, relative to all the repeating units of the polyimide resin precursor, the amount is preferably 0.5 mol% or more, more preferably 5 mol% or more, still more preferably 10 mol% or more. The amount relative to all the repeating units of the polyimide resin precursor is also preferably 50 mol% or less, more preferably 40 mol% or less, still more preferably 35 mol% or less.

Also, in the case of a polyimide resin, relative to all the repeating units of the polyimide resin, the amount is preferably 0.5 mol% or more, more preferably 5 mol% or more, still more preferably 10 mol% or more. The amount relative to all the repeating units of the polyimide resin is also preferably 50 mol% or less, preferably 40 mol% or less,

more preferably 35 mol% or less.

In the polyimide resin precursor or polyimide resin, when the introduction amount of the hydrogen-bond-forming monomer satisfies such a range, the resultant polyimide resin cover tends to have both of high elasticity and high elongation. Hereafter, the introduction amount of the hydrogen-bond-forming monomer relative to all the repeating units will be referred to as "hydrogen-bond-forming monomer introduction amount".

($R^a$)

In Formulas (0) and (0'), $R^a$ represents a structure derived from a tetracarboxylic dianhydride; in each of Formulas (0) and (0'), $R^a$ may be the same or different.

Examples of the tetracarboxylic dianhydride forming $R^a$ include chain aliphatic tetracarboxylic dianhydrides, alicyclic tetracarboxylic dianhydrides, and aromatic tetracarboxylic dianhydrides. These compounds may be used alone or in appropriate combination of two or more thereof in an appropriate ratio.

Examples of the chain aliphatic tetracarboxylic dianhydrides include ethylenetetracarboxylic dianhydride, butanetetracarboxylic dianhydride, and meso-butane-1,2,3,4-tetracarboxylic dianhydride.

Examples of the alicyclic tetracarboxylic dianhydrides include 3,3',4,4'-biscyclohexanetetracarboxylic dianhydride, 1,2,3,4-cyclobutanetetracarboxylic dianhydride, 1,2,3,4-cyclopentanetetracarboxylic dianhydride, 1,2,4,5-cyclohexanetetracarboxylic dianhydride, 1,2,3,4-tetramethyl-1,2,3,4-cyclobutanetetracarboxylic dianhydride, 5-(2,5-dioxotetrahydrofuryl)-3-methyl-3-cyclohexene-11,2-dicarboxylic anhydride, tricyclo[6.4.0.0$^{2,7}$]dodecane-1,8:2,7-tetracarboxylic dianhydride, bicyclo[2.2.2]oct-7-ene-2,3,5,6-tetracarboxylic dianhydride, 4-(2,5-dioxotetrahydrofuran-3-yl)-1,2,3,4-tetrahydronaphthalene-1,2-dicarboxylic anhydride, and 1,1'-bicyclohexane-3,3',4,4'-tetracarboxylic dianhydride.

Examples of the aromatic tetracarboxylic dianhydrides include pyromellitic dianhydride, 1,2,3,4-benzenetetracarboxylic dianhydride, 1,1-bis(2,3-dicarboxyphenyl)ethane dianhydride, bis(2,3-dicarboxyphenyl)methane dianhydride, bis(3,4-dicarboxyphenyl)methane dianhydride, 3,3',4,4'-biphenyltetracarboxylic dianhydride, 2,2-bis(3,4-dicarboxyphenyl)propane dianhydride, 2,2-bis(2,3-dicarboxyphenyl)propane dianhydride, bis(3,4-dicarboxyphenyl) sulfone dianhydride, bis(3,4-dicarboxyphenyl) ether dianhydride, bis(2,3-dicarboxyphenyl) ether dianhydride, 3,3',4,4'-benzophenonetetracarboxylic dianhydride, 2,2',3,3'-benzophenonetetracarboxylic dianhydride, 4,4'-oxydiphthalic dianhydride, 4,4-(p-phenylenedioxy)diphthalic dianhydride, 4,4-(m-phenylenedioxy)diphthalic dianhydride, 2,2',6,6'-biphenyltetracarboxylic dianhydride, 2,2-bis(3,4-dicarboxyphenyl)-1,1,1,3,3,3-hexafluoropropane dianhydride, 2,2-bis(2,3-dicarboxyphenyl)-1,1,1,3,3,3-hexafluoropropane dianhydride, 2,2'-bis(trifluoromethyl)-4,4',5,5'-biphenyltetracarboxylic dianhydride, 4,4'-(hexafluorotrimethylene)-diphthalic dianhydride, 4,4'-(octafluorotetramethylene)-diphthalic dianhydride, 4,4'-oxydiphthalic anhydride, 1,2,5,6-naphthalenedicarboxylic dianhydride, 1,4,5,8-naphthalenedicarboxylic dianhydride, 2,3,6,7-naphthalenedicarboxylic dianhydride, 3,4,9,10-perylenetetracarboxylic dianhydride, 2,3,6,7-anthracenetetracarboxylic dianhydride, and 1,2,7,8-phenanthrenetetracarboxylic dianhydride.

($R^b$)

In Formulas (0) and (0'), $R^b$ represents a structure derived from a diamine compound; in each of Formulas (0) and (0'), $R^b$ may be the same or different.

Examples of the diamine compound forming $R^b$ include aromatic diamine compounds, chain aliphatic diamine compounds, and alicyclic diamine compounds. These compounds may be used alone or in appropriate combination of two or more thereof in an appropriate ratio.

Examples of the aromatic diamine compounds include 1,4-phenylenediamine, 1,2-phenylenediamine, 1,3-phenylenediamine, 4,4'-(biphenyl-2,5-diylbisoxy)bisaniline, 4,4'-diaminodiphenyl ether, 3,4'-diaminodiphenyl ether, 1,4-bis(4-aminophenoxy)benzene, 1,3-bis(4-aminophenoxy)benzene, 2,2-bis(4-(4-aminophenoxy)phenyl)propane, bis(4-(4-aminophenoxy)phenyl) sulfone, bis(4-(3-aminophenoxy)phenyl) sulfone, 1,3-bis(4-aminophenoxy)neopentane, 4,4'-diamino-3,3'-dimethylbiphenyl, 4,4'-diamino-2,2'-dimethylbiphenyl, 4,4'-bis(4-aminophenoxy)biphenyl, 4,4'-diamino-3,3'-dihydroxybiphenyl, bis(4-amino-3-carboxyphenyl)methane, 4,4'-diaminodiphenyl sulfone, 3,3'-diaminodiphenyl sulfone, 4,4'-diaminodiphenyl sulfide, N-(4-aminophenoxy)-4-aminobenzamine, 2,2'-bis(trifluoromethyl)-4,4'-diaminobiphenyl, bis(3-aminophenyl) sulfone, norbornanediamine, 4,4'-diamino-2-(trifluoromethyl)diphenyl ether, 5-trifluoromethyl-1,3-benzenediamine, 2,2-bis(4-(4-aminophenoxy)phenyl)hexafluoropropane, 4,4'-diamino-2,2'-bis(trifluoromethyl)biphenyl, 2,2-bis[4-{4-amino-2-(trifluoromethyl)phenoxy}phenyl]hexafluoropropane, 2-trifluoromethyl-p-phenylenediamine, 2,2-bis(3-amino-4-methylphenyl)hexafluoropropane, 4,4'-(9-fluorenylidene)dianiline, 2,7-diaminofluorene, 1,5-diaminonaphthalene, and 3,7-diamino-2,8-dimethyldibenzothiophene 5,5-dioxide.

Examples of the chain aliphatic diamine compounds include 1,2-ethylenediamine, 1,2-diaminopropane, 1,3-diaminopropane, 1,4-diaminobutane, 1,6-hexamethylenediamine, 1,5-diaminopentane, 1,10-diaminodecane, 1,2-diamino-2-methylpropane, 2,3-diamino-2,3-butanediamine, and 2-methyl-1,5-diaminopentane.

Examples of the alicyclic diamine compounds include 1,3-bis(aminomethyl)cyclohexane, 1,4-bis(aminomethyl)cyclohexane, 1,4-diaminocyclohexane, 4,4'-methylenebis(cyclohexylamine), and 4,4'-methylenebis(2-methylcyclohexylamine).

Of the polyimide resin species included in a composition according to the present invention, the amount of the compound (0), (0') is preferably 10 wt% or more, more preferably 20 wt% or more, particularly preferably 30 wt% or more, and is preferably 90 wt% or less, more preferably 80 wt% or less, particularly preferably 70 wt% or less. When the compound (0), (0') satisfies such a range, polyimide resin species molecules tend to extend to provide coating films that are excellent in heat resistance and mechanical properties.

<Compound including functional group that reacts with terminally cyclized product of compound (0), (0')>

A polyimide resin species according to the present invention includes a compound including a functional group that reacts with the terminally cyclized product of the compound (0), (0') (hereafter, may also be referred to as "compound including a functional group that reacts with the terminally cyclized product").

The functional group that reacts with the terminally cyclized product of the compound (0), (0') is not particularly limited, and examples include an amino group, an isocyanate group, a hydroxy group, a thiol group, and a glycidyl group. In particular, the amino group and the isocyanate group, which form imide bonds after baking and molding, are preferred from the viewpoint of heat resistance and mechanical properties.

The compound including a functional group that reacts with the terminally cyclized product, which is also not particularly limited as long as it includes the functional group, may be a polyvalent compound.

In the polyimide resin species included in a composition according to the present invention, the amount of the compound including a functional group that reacts with the terminally cyclized product is preferably 10 wt% or more, more preferably 20 wt% or more, particularly preferably 30 wt% or more, and is preferably 90 wt% or less, more preferably 80 wt% or less, particularly preferably 70 wt% or less. When the amount of the compound including a functional group that reacts with the terminally cyclized product satisfies such a range, the polyimide resin species molecules tend to extend to provide coating films that are excellent in heat resistance and mechanical properties.

In a polyimide resin species according to the present invention, the content ratio of the compound (0), (0') to the compound including a functional group that reacts with the terminally cyclized product is not particularly limited; however, preferably, the compound including a functional group that reacts with the terminally cyclized product and the compound (0), (0') are present in approximately equal amounts from the viewpoint of low probability of molecular cleavage due to exchange reaction and hence extension of molecular weight.

(Compound including amino group)

The compound including a functional group that reacts with the terminally cyclized product is preferably a compound including an amino group, particularly preferably a compound whose terminal structures are amines (amine-terminated compound). The amine-terminated compound is a polyimide resin species, and has two terminal structures that are amines.

The structure of the amine-terminated compound is not particularly limited, and examples include structures represented by Formulas (5) and (6) below.

[Chem. 9]

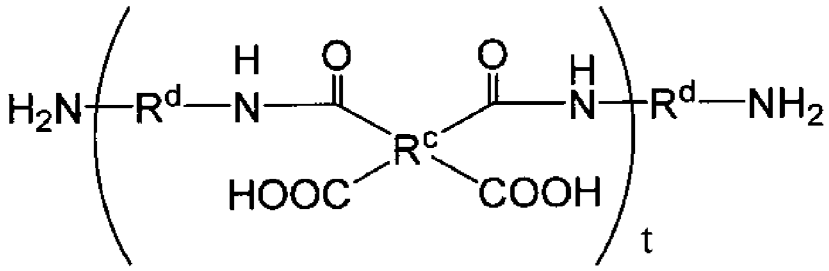

(5)

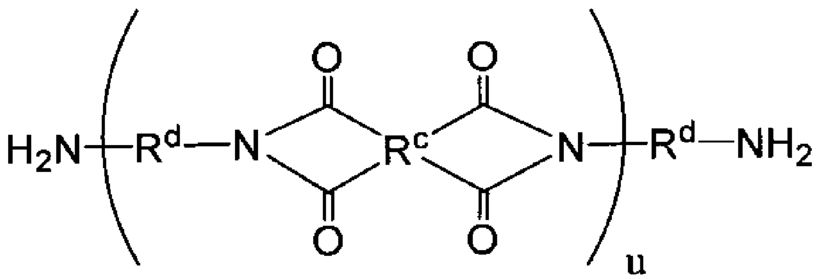

(6)

In Formula (5) and Formula (6) above, $R^c$ represents a tetracarboxylic acid residue, and $R^d$ represents a diamine residue.
t and u represent given integers.

(t and u)

t and u represent given integers that are not particularly limited and may be, for example, in ranges of the numbers of repeating in the formulas that correspond to the preferred weight-average molecular weights (Mw) of the polyimide resin species described later.

($R^c$)

In Formulas (5) and (6), $R^c$ represents a structure derived from a tetracarboxylic dianhydride; in each of Formulas (5) and (6), $R^c$ may be the same or different. Specifically, $R^c$ has the same definition and preferred examples as in $R^a$ in each of Formulas (0) and (0') described above. In a composition according to the present invention, $R^a$ and $R^c$ may be the same or different.

($R^d$)

In Formulas (5) and (6), $R^d$ represents a structure derived from a diamine compound; in each of Formulas (5) and (6), $R^d$ may be the same or different. Specifically, $R^d$ has the same definition and preferred examples as in $R^b$ in each of Formulas (0) and (0') described above. In a composition according to the present invention, $R^b$ and $R^d$ may be the same or different.

When $R^c$ and $R^d$ have the same definitions as in $R^a$ and $R^b$ in (0) and (0'), of the repeating units in Formulas (5) and (6) above, in at least one or more repeating units, $R^c$ and/or $R^d$ includes one linking group including an active hydrogen and/or one or more and four or less substituents including an active hydrogen, or all the repeating units may include one linking group including an active hydrogen and/or one or more and four or less substituents including an active hydrogen.

<Other polyimide resin species>

A composition according to the present invention may include, in addition to the compound (0), (0') and the compound including a functional group that reacts with the terminally cyclized product, a polyimide resin species having

another structure. Such a polyimide resin species having another structure is not particularly limited, and examples include compounds represented by Formulas (a) and (b) below.

[Chem. 10]

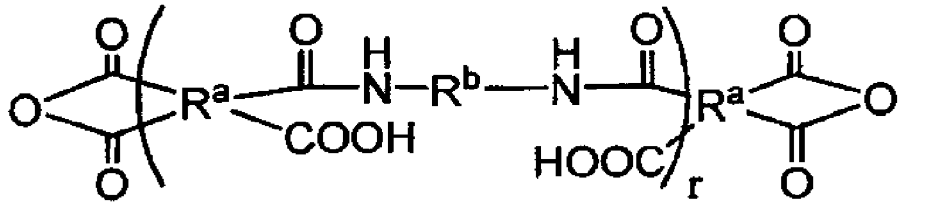

(a)

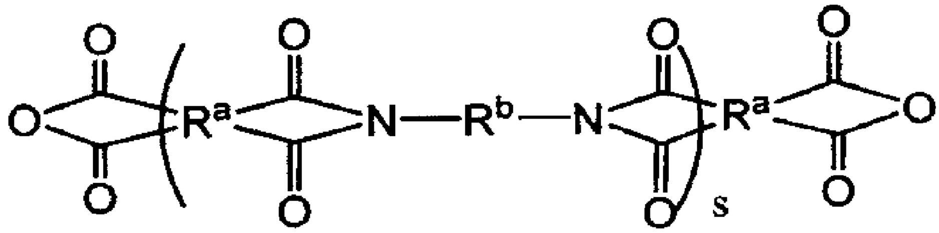

(b)

In Formulas (a) and (b) above, $R^a$ and $R^b$ have the same definitions as in $R^a$ and $R^b$ in Formulas (0) and (0'). r and s represent given integers, and have the same definitions as in p and q in Formulas (0) and (0').

Of the repeating units in Formulas (a) and (b) above, in at least one or more repeating units, $R^a$ and/or $R^b$ includes one linking group including an active hydrogen and/or one or more and four or less substituents including an active hydrogen, or all the repeating units may include one linking group including an active hydrogen and/or one or more and four or less substituents including an active hydrogen.

<Other component>

For production of the polyimide resin species, depending on the purpose, a compound including, for example, an ethynyl group, a vinyl group, an allyl group, a cyano group, or an isocyanate group serving as a crosslinking point (hereafter, may also be referred to as "another monomer") may be further used.

The polyimide resin species used in the present invention preferably includes, from the viewpoint of heat resistance and productivity, at least one of a structural unit represented by Formula (1) below or a structural unit represented by Formula (2) below. In particular, the structural units represented by Formulas (1) and (2) below are preferably included in Formulas (0), (0'), (a), and (b). When the structural units represented by Formulas (1) and (2) below are included, reactivity during polymerization and solubility of the polyimide resin species in the solvent are both improved, to thereby provide a polyimide resin cover having a rigid skeleton and high heat resistance.

[Chem. 11]

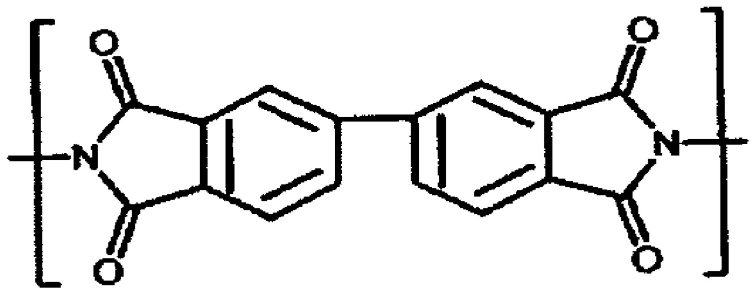

(1)

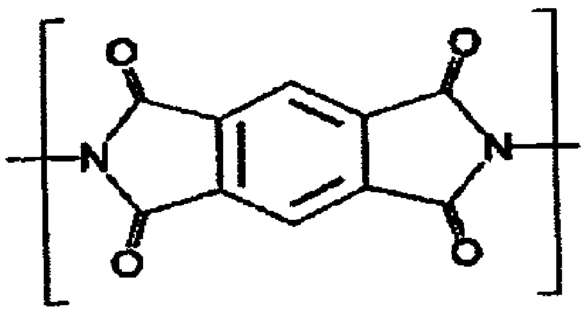

(2)

The structural units represented by Formulas (1) and (2) above may be derived from tetracarboxylic dianhydrides or may be derived from diamine compounds, and are ordinarily introduced, using tetracarboxylic dianhydrides, into the polyimide resin species. Thus, a polyimide resin species used in the present invention is preferably produced using, as a raw-material tetracarboxylic dianhydride, at least pyromellitic dianhydride and/or 3,3',4,4'-biphenyltetracarboxylic dianhydride.

A polyimide resin species used in the present invention preferably includes, from the viewpoint of improved heat resistance and productivity, a structural unit represented by Formula (3) below.

[Chem. 12]

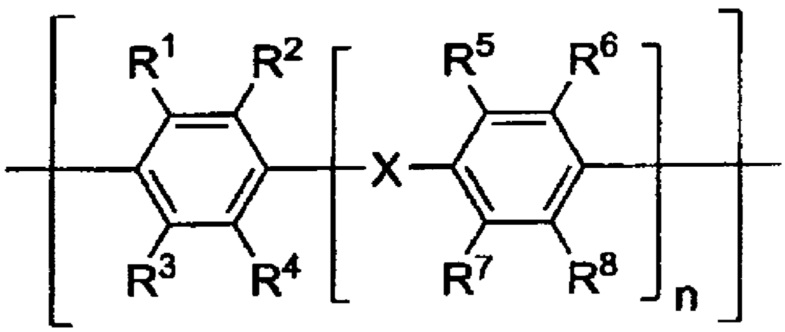

(3)

In Formula (3) above, $R^1$ to $R^8$ may be the same or different, and represent a hydrogen atom, an alkyl group having 1 or more and 4 or less carbon atoms, a fluoroalkyl group having 1 or more and 4 or less carbon atoms, or a hydroxy group. Of these, preferred is a hydrogen atom or a methyl group because the reactivity during polymerization and the solubility of the polyimide resin species in the solvent are both improved.

In Formula (3) above, X is a direct bond, an oxygen atom, a sulfur atom, an alkylene group having 1 or more and 4 or less carbon atoms, a sulfonyl group, a sulfinyl group, a sulfide group, a carbonyl group, an amide group, an ester group, or a secondary amino group. Of these, because the polyimide resin cover obtained by heat-baking has improved mechanical properties and improved heat resistance, preferred is a direct bond, an oxygen atom, a sulfur atom, an alkylene group having 1 or more and 4 or less carbon atoms, a sulfonyl group, or an amide group, and particularly preferred is an oxygen atom.

In Formula (3) above, n is an integer of 0 to 4. n is preferably an integer of 1 to 4.

Throughout a single molecule of the polyimide resin species, the structural units represented by Formula (3) are not necessarily the same in terms of all of $R^1$ to $R^8$, X, and n. In particular, when n is an integer of 2 or more, X may have different structures.

Of the structural units represented by Formula (3), preferred is any one of structural units represented by Formula (3-1) to Formula (3-6) below because the polyimide resin cover obtained by heat-baking has improved mechanical properties and improved heat resistance. In a single molecule of the polyimide resin species, these structural units may be included alone or in combination of two or more thereof.

[Chem. 13]

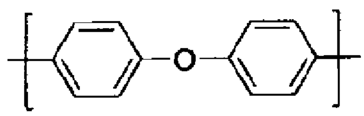
(3-1)

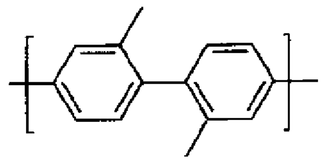
(3-2)

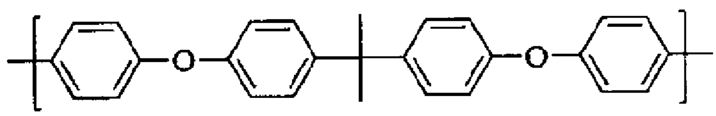
(3-3)

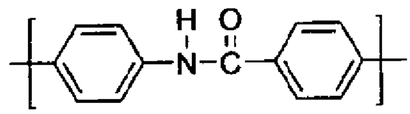
(3-4)

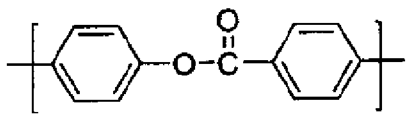
(3-5)

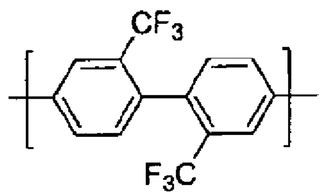
(3-6)

The structural unit represented by Formula (3) above may be derived from a tetracarboxylic dianhydride or may be derived from a diamine compound, and is ordinarily introduced, using a diamine compound, into the polyimide resin species.

Thus, a polyimide resin species used in the present invention is preferably produced using, as a diamine compound, at least a diamine compound represented by Formula (4) below.

[Chem. 14]

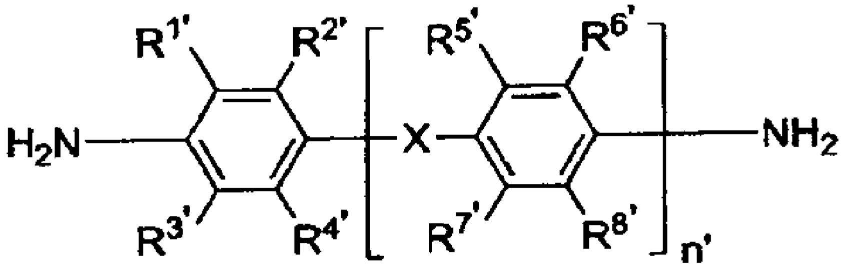

(4)

In Formula (4) above, $R^{1'}$ to $R^{8'}$ have the same definitions as in $R^1$ to $R^8$ in Formula (3) above. X' has the same definition as in X. n' has the same definition as in n.

Examples of the diamine compound represented by Formula (4) above include 4,4'-diaminodiphenyl ether, 2,2'-dimethyl-4,4'-diaminobiphenyl, 1,4-bis(4-aminophenoxy)benzene, 2,2-bis(4-(4-aminophenoxy)phenyl)propane, 2,2-bis(4-(4-aminophenoxy)phenyl)hexafluoropropane, 2,2-bis[4-(4-aminophenoxy)phenyl]propane, 4,4'-bis(4-aminophenoxy)biphenyl, 2,2'-bis(trifluoromethyl)-4,4'-diaminobiphenyl, 4,4'-diaminobenzoylanilide, 4-aminophenyl-4-aminobenzoate, bis(4-aminophenyl)terephthalate, bis(4-(4-aminophenoxy)phenyl) sulfone, and bis(4-amino-3-carboxyphenyl)methane. Of these, preferred examples include 4,4'-diaminodiphenyl ether, 2,2'-dimethyl-4,4'-diaminobiphenyl, and 2,2'-bis(trifluoromethyl)-4,4'-diaminobiphenyl.

A polyimide resin species used in the present invention may include a structural unit other than the structural unit represented by Formula (1) or (2) above and the structural unit represented by Formula (3) above; however, in order to effectively provide the above-described advantages due to the structural unit represented by Formula (1) or (2) above and the structural unit represented by Formula (3) above, all the structural units derived from a tetracarboxylic dianhydride and constituting the polyimide resin species preferably include the structural unit represented by Formula (1) and/or (2) in an amount of 80 mol% or more, particularly 90 to 100 mol%, and all the structural units derived from a diamine compound and constituting the polyimide resin species preferably include the structural unit represented by Formula (3) in an amount of 80 mol% or more, particularly 90 to 100 mol%.

<Production method>

The method for producing the polyimide resin species is not particularly limited, and publicly known imidization method can be used. Examples include a method of subjecting, in the presence of a reaction solvent, the above-described tetracarboxylic dianhydride and diamine compound to heat-dehydration or use of a dehydration reagent to cause an imidization reaction; and a method of causing, in the presence of a reaction solvent, an amidation reaction of the tetracarboxylic dianhydride and diamine compound to provide a polyimide resin precursor, and subsequently subjecting the precursor to heat-dehydration or use of a dehydration reagent to cause an imidization reaction. Within this reaction system, the above-described hydrogen-bond-forming monomer is provided in a necessary amount, to thereby produce an insulating cover material including a repeating unit including a hydrogen-bond-forming structure. Furthermore, within this reaction system, the above-described another monomer may be provided for the reaction.

The compound (0), (0') and the compound including a functional group that reacts with the terminally cyclized product may be simultaneously generated within the reaction system, or may be individually obtained and then mixed together.

The reaction in the presence of a reaction solvent provides the polyimide resin species as a polyimide-resin-species composition.

Hereafter, the tetracarboxylic dianhydride, the diamine compound, the hydrogen-bond-forming monomer, and another monomer will be collectively referred to as "tetracarboxylic dianhydride, diamine compound, and other raw materials".

The dehydration reagent can be selected from publicly known reagents. Examples include acid anhydrides such as acetic anhydride, propionic anhydride, benzoic anhydride, trifluoroacetic anhydride, and chloroacetic anhydride.

The method of reacting the tetracarboxylic dianhydride, diamine compound, and other raw materials in a solvent is not particularly limited. The order of adding and the method of adding the tetracarboxylic dianhydride, diamine compound, and other raw materials are also not particularly limited. For example, there is a method of subjecting the terminals of the tetracarboxylic dianhydride to ring-opening using water or alcohol, and subsequently to a reaction with the diamine compound, to thereby obtain a polyimide resin precursor such as the compound represented by Formula (0) above and a compound including a functional group that reacts with the terminally cyclized product (such as the compound represented by Formula (5) above). The amounts of these compounds can be appropriately adjusted using the proportions

of the tetracarboxylic dianhydride and the diamine compound and the amount of alcohol, for example.

Examples of the alcohol include monohydric aliphatic alcohols such as methanol, ethanol, 1-propanol, 2-propanol, tert-butyl alcohol, 1-butanol, 2-methylpropanol, 1-pentanol, 1-hexanol, 1-heptanol, 2-ethyl-1-hexanol, 1-octanol, 1-decanol, and diacetone alcohol; dihydric aliphatic alcohols such as ethylene glycol, propylene glycol, trimethylene glycol, butanediol, hexamethylene glycol, 1,5-pentanediol, 2-butene-1,4-diol, and 2-methyl-2,4-pentanediol; and trihydric aliphatic alcohols such as glycerol and 1,2,6-hexanetriol. In particular, preferred are methyl alcohol and ethyl alcohol from the viewpoint of leaving during baking. These alcohols may be used alone, or water and two or more appropriately selected from the alcohols may be used in combination in an appropriate ratio.

In order to improve the reactivity between the tetracarboxylic dianhydride and water, alcohol, and the like, a catalyst may be used as needed as described later. Examples of the catalyst include pyridine, isoquinoline, 2-methylpyridine, 3-methylpyridine, 4-methylpyridine, 4-phenoxypyridine, 2,6-dimethylpyridine, N,N-dimethylethanolamine, dimethylaminopyridine, and triethanolamine. Of these, preferred are catalysts having a substituent, and particularly preferred are catalysts having, as a substituent, amine, that are N,N-dimethylethanolamine, dimethylaminopyridine, and triethanolamine.

The amount of diamine compound used for the reaction relative to 1 mol of the tetracarboxylic dianhydride is ordinarily 0.7 mol or more, preferably 0.8 mol or more, still more preferably 0.9 mol or more, and is ordinarily 1.3 mol or less, preferably 1.2 mol or less, still more preferably 1.1 mol or less. When the amount of diamine compound is set to satisfy such a range, the resultant polyimide resin species tends to have a high degree of polymerization to provide improved film formability and film-formation capability.

In the solvent, the concentrations of the tetracarboxylic dianhydride, diamine compound, and other raw materials can be appropriately set in accordance with the reaction conditions and the viscosity of the resultant polyimide-resin-species composition.

The total concentration of the tetracarboxylic dianhydride, diamine compound, and other raw materials is not particularly limited, but is, relative to the total amount of the solution including the tetracarboxylic dianhydride, diamine compound, and other raw materials and the solvent, ordinarily 1 wt% or more, preferably 5 wt% or more, and is ordinarily 70 wt% or less, preferably 50 wt% or less. In such a concentration range, polymerization is performed to thereby provide a polyimide resin species that is uniform and has a high degree of polymerization. When the polymerization is performed at a total concentration of 1 wt% or more of the tetracarboxylic dianhydride, diamine compound, and other raw materials, the polyimide resin species tends to have a sufficiently high degree of polymerization, to ensure the strength of the finally obtained polyimide resin cover. On the other hand, when the total concentration of the tetracarboxylic dianhydride, diamine compound, and other raw materials is 70 wt% or less, an increase in the viscosity of the solution tends to be suppressed, which facilitates stirring.

In the case of obtaining the polyimide resin in a solvent, the temperature at which the tetracarboxylic dianhydride, diamine compound, and other raw materials are caused to react in the solvent is not particularly limited as long as the reaction proceeds at the temperature, but is ordinarily 20°C or more, preferably 40°C or more, and is ordinarily 240°C or less, preferably 220°C or less.

The reaction time is ordinarily 1 hour or more, preferably 2 hours or more, and is ordinarily 100 hours or less, preferably 42 hours or less.

When the reaction is caused under such conditions, the polyimide resin tends to be obtained at low costs and at high yield.

The pressure during the reaction may be normal pressure, increased pressure, or reduced pressure. The atmosphere may be the air or an inert atmosphere; preferred is an inert atmosphere from the viewpoint of bending conformability of the resultant polyimide resin and a metal insulating cover material formed thereof according to the present invention.

In the case of obtaining the polyimide resin precursor in a solvent, the temperature at which the tetracarboxylic dianhydride, diamine compound, and other raw materials are caused to react in the solvent is not particularly limited as long as the reaction proceeds at the temperature, but is ordinarily 0°C or more, preferably 20°C or more, and is ordinarily 120°C or less, preferably 100°C or less.

The reaction time is ordinarily 1 hour or more, preferably 2 hours or more, and is ordinarily 100 hours or less, preferably 42 hours or less.

When the reaction is caused under such conditions, the polyimide resin precursor tends to be obtained at low costs and at high yield.

The pressure during the reaction may be normal pressure, increased pressure, or reduced pressure. The atmosphere may be the air or an inert atmosphere; preferred is an inert atmosphere from the viewpoint of bending conformability of the resultant polyimide resin and a metal insulating cover material formed thereof according to the present invention.

The solvent used during the reaction of the tetracarboxylic dianhydride, diamine compound, and other raw materials is not particularly limited; examples include hydrocarbon solvents such as hexane, cyclohexane, heptane,

benzene, naphtha, toluene, xylene, mesitylene, and anisole; halogenated hydrocarbon solvents such as carbon tetrachloride, methylene chloride, chloroform, 1,2-dichloroethane, chlorobenzene, dichlorobenzene, and fluorobenzene; ether-based solvents such as diethyl ether, tetrahydrofuran, 1,4-dioxane, and methoxybenzene; ketone-based solvents such as acetone, methyl ethyl ketone, cyclohexanone, and methyl isobutyl ketone; glycol-based solvents such as ethylene glycol monomethyl ether, ethylene glycol monoethyl ether, ethylene glycol dimethyl ether, diethylene glycol dimethyl ether, and propylene glycol monomethyl ether acetate; amide-based solvents such as N,N-dimethylformamide, N,N-dimethylacetamide, and N-methyl-2-pyrrolidone; sulfone-based solvents such as dimethyl sulfoxide; heterocyclic solvents such as pyridine, picoline, lutidine, quinoline, and isoquinoline; phenol-based solvents such as phenol and cresol; lactone-based solvents such as γ-butyrolactone, γ-valerolactone, and δ-valerolactone. Of these, preferred are glycol-based solvents, amide-based solvents, and lactone-based solvents because the polyimide resin species tends to have high solubility, so that the composition viscosity and the like become suitable for handling in ordinary production equipment.

These solvents may be used alone or in appropriate combination of two or more thereof in an appropriate ratio.

In order to improve the reactivity of the tetracarboxylic dianhydride, diamine compound, and other raw materials, an organic amine compound may be used as a catalyst. Examples of the organic amine compound include tertiary alkylamines such as trimethylamine, triethylamine, tripropylamine, and tributylamine; alkanolamines such as triethanolamine, N,N-dimethylethanolamine, and N,N-diethylethanolamine; alkylenediamines such as triethylenediamine; pyridines such as pyridine; pyrrolidines such as N-methylpyrrolidine and N-ethylpyrrolidine; piperidines such as N-methylpiperidine and N-ethylpiperidine; imidazoles such as imidazole; and quinolines such as quinoline and isoquinoline. These may be used alone or in appropriate combination of two or more thereof in an appropriate ratio.

The obtained polyimide resin species can also be added to a poor solvent to precipitate in a solid form and collected.

In this case, the poor solvent employed is not particularly limited, and can be appropriately selected in accordance with the type of the polyimide resin species. Examples of the poor solvent include ether-based solvents such as diethyl ether and diisopropyl ether; ketone-based solvents such as acetone, methyl ethyl ketone, isobutyl ketone, and methyl isobutyl ketone; alcohol-based solvents such as methanol, ethanol, and isopropyl alcohol. Of these, preferred are alcohol-based solvents such as methanol and isopropyl alcohol because they tend to efficiently provide the precipitate and have low boiling points, which facilitates drying. These poor solvents may be used alone or in appropriate combination of two or more thereof in an appropriate ratio.

The polyimide resin species obtained by precipitation in a poor solvent can also be dissolved again in a solvent and used as a composition.

<Weight-average molecular weight>

The weight-average molecular weight (Mw) of a polyimide resin species used in the present invention is not particularly limited; however, the polystyrene-equivalent weight-average molecular weight is ordinarily 1,000 or more, preferably 3,000 or more, more preferably 5,000 or more, and is ordinarily 200,000 or less, preferably 150,000 or less, more preferably 100,000 or less. Mw is preferably set so as to satisfy such a range because the composition viscosity and the like tend to become suitable for handling in production equipment.

The polystyrene-equivalent weight-average molecular weight of the polyimide resin species can be determined by gel permeation chromatography (GPC).

<Degree of imidization>

When the polyimide resin species in a composition according to the present invention becomes insoluble in the solvent due to imidization, the degree of imidization calculated by $^1$H-NMR is preferably 1 mol% or more, more preferably 3 mol% or more, still more preferably 5 mol% or more, particularly preferably 8 mol% or more, and is preferably 35 mol% or less, more preferably 30 mol% or less, still more preferably 25 mol% or less, particularly preferably 20 mol% or less. When the degree of imidization is controlled to such a preferred range, the resultant polyimide resin is well-balanced between elastic modulus and elongation at break. On the other hand, when imidization does not result in insolubility in the solvent, the degree of imidization is not particularly limited, but is, for example, 90 mol% or more.

<Polyimide-resin-species concentration>

In a composition according to the present invention, the concentration of the polyimide resin precursor and/or polyimide resin, namely, the polyimide resin species, is preferably 15 wt% or more and 40 wt% or less. This concentration is preferably 16 wt% or more, more preferably 18 wt% or more, and is preferably 35 wt% or less, more preferably less than 30 wt%, still more preferably 28 wt% or less. When the concentration of the polyimide resin species is set so as to

satisfy such a range, the productivity tends to be improved while the film formability is maintained.

In a composition according to the present invention, the concentration of the polyimide resin species can be appropriately determined by known methods. For example, the solvent and other components in the composition can be driven off by a process such as reduced-pressure drying, and the ratio of weights before and after the driving off can be used to determine the concentration. Alternatively, the charging weights of the composition can be used to determine the concentration.

[Solvent]

The solvent included in a composition according to the present invention is ordinarily the solvent used as the reaction solvent in the above-described production method for a polyimide resin species according to the present invention, or the solvent used, after production of the polyimide resin species, to dissolve again the polyimide resin species precipitated in a solid form in the poor solvent, to provide the composition; examples include the solvents described as examples of the reaction solvent used for production of the polyimide resin species.

The solvent included in a composition according to the present invention is, from the viewpoint of solubility of the polyimide resin species or the post-baking residual solvent, preferably a solvent having a boiling point of 80°C or more; from this viewpoint, the solvent more preferably has a boiling point of 100°C or more, still more preferably 120°C or more. On the other hand, when the solvent has an excessively high boiling point, the solvent tends to remain after baking. For this reason, the solvent preferably has a boiling point of 250°C or less, in particular, 210°C or less.

Examples of the solvent that satisfies such boiling-point conditions include, of the solvents described above as the reaction solvents, glycol-based solvents such as ethylene glycol monomethyl ether, ethylene glycol monoethyl ether, ethylene glycol dimethyl ether, diethylene glycol dimethyl ether, and propylene glycol monomethyl ether acetate; amide-based solvents such as N,N-dimethylformamide, N,N-dimethylacetamide, and N-methyl-2-pyrrolidone; sulfone-based solvents such as dimethyl sulfoxide; heterocyclic solvents such as picoline, lutidine, quinoline, and isoquinoline; phenol-based solvents such as phenol and cresol; and lactone-based solvents such as γ-butyrolactone, γ-valerolactone, and δ-valerolactone. Of these, preferred are glycol-based solvents, amide-based solvents, and lactone-based solvents because the polyimide resin species tends to have high solubility, so that the composition viscosity and the like become suitable for handling in ordinary production equipment.

These solvents may be used alone or in appropriate combination of two or more thereof in an appropriate ratio.

[Polymer including heterocycle in side chain]

A composition according to the present invention may contain a polymer including a heterocycle in a side chain described below. When a composition according to the present invention includes a polymer including a heterocycle in a side chain, the resultant polyimide resin cover has higher bending resistance.

In this case, the polymer including a heterocycle in a side chain employed is ordinarily a polymer of a heterocyclic compound including a vinyl group, and may be a homopolymer (homopolymer) or a copolymer.

Examples of the heterocyclic compound including a vinyl group serving as a monomer component of the polymer including a heterocycle in a side chain include vinylpyrrolidone, vinylpyridine, vinylpyrrole, vinylporphyrin, vinylindole, vinylphthalimide, and vinylthiophene. Of these, preferred are heterocyclic compounds including a nitrogen atom because of high compatibility with the polyimide resin species. Also preferred are five-membered ring and/or six-membered ring heterocyclic compounds from the viewpoint of solubility in solvents.

Examples of homopolymers formed from these heterocyclic compounds include polyvinylpyrrolidone, polyvinylpyridine, polyvinylpyrrole, polyvinylporphyrin, polyvinylindole, polyvinylphthalimide, and polyvinylthiophene.

The polymer including a heterocycle in a side chain may be a copolymer of two or more species of these heterocyclic compounds including a vinyl group, or a copolymer of one or two or more species of the heterocyclic compounds including a vinyl group and one or two or more species of other vinyl-based monomers. Examples of the copolymer of a heterocyclic compound including a vinyl group and another vinyl-based monomer include polyvinylpyridine-polystyrene copolymers and polyvinylpyrrolidone-polyvinyl alcohol copolymers.

In particular, the polymer including a heterocycle in a side chain is preferably a polymer in which the heterocycle is constituted by a nitrogen atom and carbon atoms; preferred are polyvinylpyrrolidone, polyvinylpyridine, and copolymers including, as a copolymerization component, vinylpyrrolidone and/or vinylpyridine; particularly preferred are polyvinylpyrrolidone and polyvinylpyridine. Such a copolymer including, as a copolymerization component, vinylpyrrolidone and/or vinylpyridine preferably includes, relative to all the structural units derived from monomers constituting the copolymer, 50 mol% or more of the structural unit derived from vinylpyrrolidone and/or vinylpyridine.

A polymer including a heterocycle in a side chain used in the present invention preferably has a molecular weight of 5,000 to 2,000,000, more preferably 10,000 to 2,000,000, still more preferably 20,000 to 1,800,000, particularly preferably 30,000 to 1,500,000. When the polymer including a heterocycle in a side chain has a molecular weight

satisfying such a range and is coordinated to between molecules of the polyimide resin, it tends to sufficiently function to weaken the intermolecular force of polyimide. This term "molecular weight" means weight-average molecular weight (Mw), and is a polystyrene-equivalent value measured by gel permeation chromatography (GPC).

Such polymers including a heterocycle in a side chain may be used alone or in appropriate combination of two or more thereof in an appropriate ratio.

When a composition according to the present invention includes the polymer including a heterocycle in a side chain, the content of the polymer including a heterocycle in a side chain relative to 100 parts by weight of the polyimide resin species is preferably 0.1 to 7 parts by weight. When the content of the polymer including a heterocycle in a side chain relative to 100 parts by weight of the polyimide resin species is 0.1 parts by weight or more, the effect of improving the bending resistance due to addition of the polymer including a heterocycle in a side chain tends to be sufficiently exerted. When the content of the polymer including a heterocycle in a side chain relative to 100 parts by weight of the polyimide resin species is 7 parts by weight or less, molecular cleavage of the polymer including a heterocycle in a side chain due to heat during molding of the polyimide resin cover is suppressed, and the target bending resistance tends to be achieved.

In a composition according to the present invention, the content of the polymer including a heterocycle in a side chain relative to 100 parts by weight of the polyimide resin species is more preferably 0.5 to 5 parts by weight.

A composition including, in such a ratio, a polymer including a heterocycle in a side chain according to the present invention is produced by mixing the polymer including a heterocycle in a side chain with a polyimide-resin-species composition produced by, for example, the above-described method.

[Other components]

A composition according to the present invention may contain, from the viewpoint of, for example, imparting coatability, imparting workability, or imparting various functions, a surfactant, a defoaming agent, a coloring material such as an organic pigment, an antioxidant, an ultraviolet absorbent, a stabilizer such as a hindered amine-based light stabilizer, an antistatic agent, a lubricating oil, an antistatic agent, a flame retardant, a plasticizer, a release agent, or a leveling agent, for example. A composition according to the present invention may contain, unless the present invention is hindered from achieving an object, another resin that is other than the polyimide resin species, an inorganic filler, or an organic filler.

Examples of the inorganic filler include inorganic oxides such as silica, diatomaceous earth, beryllium oxide, pumice, and pumice balloons; hydroxides such as aluminum hydroxide and magnesium hydroxide; metal carbonates such as calcium carbonate, magnesium carbonate, basic magnesium carbonate, dolomite, and dawsonite; metal sulfates and sulfites such as calcium sulfate, barium sulfate, ammonium sulfate, and calcium sulfite; silicates such as talc, clay, mica, asbestos, glass fiber, glass balloons, glass beads, calcium silicate, montmorillonite, and bentonite; powder, granular, plate-shaped, or fibrous inorganic fillers such as molybdenum sulfide, zinc borate, barium metaborate, calcium borate, sodium borate, and boron fiber; and powder, granular, fibrous, or whisker ceramic fillers such as silicon carbide, silicon nitride, zirconia, aluminum nitride, titanium carbide, and potassium titanate.

Examples of the organic fillers include outer-seed-cover fibers such as chaff, wood flour, cotton, jute, paper fragments, cellophane fragments, aromatic polyamide fiber, cellulose fiber, nylon fiber, polyester fiber, polypropylene fiber, thermosetting resin powder, and rubber.

Such a filler employed may be a filler processed to have a flat plate shape such as nonwoven fabric, or a mixture of a plurality of materials.

Such various fillers and addition components may be added in any stage of any step during production of a composition according to the present invention.

Of such other components, the leveling agent is preferably included because the resultant polyimide resin cover tends to have improved smoothness. Examples of the leveling agent include silicone-based compounds. The silicone-based compounds are not particularly limited, and examples include polyether-modified siloxane, polyether-modified polydimethylsiloxane, polyether-modified hydroxy group-containing polydimethylsiloxane, polyether-modified polymethylalkylsiloxane, polyester-modified polydimethylsiloxane, polyester-modified hydroxy group-containing polydimethylsiloxane, polyester-modified polymethylalkylsiloxane, aralkyl-modified polymethylalkylsiloxane, highly polymerized silicone, amino-modified silicone, amino derivative silicone, phenyl-modified silicone, and polyether-modified silicone.

[Viscosity]

A composition according to the present invention preferably has a viscosity of 10,000 cP or less. This viscosity is more preferably 8,000 cP or less, still more preferably 6,000 cP or less. The lower limit of the viscosity is not particularly defined, but is, for example, 10 cP or more.

When a composition according to the present invention has a viscosity of 10,000 cP or less, the composition

according to the present invention tends to form a coating film having less variations and to have improved coatability. In particular, in the case of coating, for example, a linear or rod body such as an electric wire, variations tend to occur in the thickness of the coating film, and hence the above-described viscosity is preferred.

A method for measuring the viscosity of a composition according to the present invention is not particularly limited; the "viscosity" used herein means a rotational viscosity measured at 30°C using an E-type viscometer.

[Glass transition temperature (Tg)]

A baked film of a composition according to the present invention preferably has a glass transition temperature (Tg) of, determined by a DMS method (dynamic thermomechanical spectrometer), 250°C or more, more preferably 260°C or more, still more preferably 270°C or more, particularly preferably 280°C or more. The glass transition temperature is preferably such a lower limit or more from the viewpoint of heat resistance. On the other hand, the upper limit of the glass transition temperature (Tg) of a baked film of a composition according to the present invention is not particularly limited, and is ordinarily 400°C or less; alternatively, some films do not have Tg.

The glass transition temperature (Tg) determined by the DMS method can be measured by procedures described later in

EXAMPLES.

[Applications]

A composition according to the present invention is applicable to display substrates, FPCs, electric wire covers, thin-film photovoltaic cell substrates, organic optical semiconductor lighting devices, LED-mounted substrates, sensor substrates, and switch substrates, for example.

A composition according to the present invention, which has characteristics of high heat resistance, bending resistance, furthermore abrasion resistance, and adhesion, is applicable to, in addition to those described above, insulating cover materials, metal cover materials for, for example, metal wires and metal plates, polyimide films, and polyimide laminates, for example. Note that the "insulating" means, in an electric machine or a circuit, blocking current flowing to peripheral components and conductors.

In all of the applications, a composition according to the present invention is ordinarily used in various applications by forming films on substrates.

The process of using a composition according to the present invention to form a film is not particularly limited, and examples include a process of coating a substrate or the like.

Examples of the coating process include die coating, spin coating, dip coating, screen printing, spraying, a casting process, processes using coaters, a coating process by spraying, an immersion process, a calender process, and a casting process. These processes can be appropriately selected in accordance with, for example, the area of coating and the shape of the surface to be coated.

The process of evaporating the solvent included in the film formed by coating or the like is also not particularly limited. Ordinarily, the carrier substrate coated with the composition is heated, to evaporate the solvent. The heating process is not particularly limited, and examples include hot-air heating, vacuum heating, infrared heating, microwave heating, and contact heating using, for example, a hot plate or a hot roll.

In this case, the heating temperature employed can be an appropriate temperature depending on the type of the solvent. The heating temperature is ordinarily 40°C or more, preferably 100°C or more, still more preferably 200°C or more, particularly preferably 300°C or more, and is ordinarily 1000°C or less, preferably 700°C or less, more preferably 600°C or less, particularly preferably 500°C or less. The heating temperature is preferably 40°C or more because the solvent is sufficiently evaporated. When the heating temperature is 300°C or more, the imidization reaction proceeds rapidly, which enables baking in a short time.

The atmosphere in the heating may be the air or an inert atmosphere and is not particularly limited. When the film needs to be formed so as to be colorless and transparent, in order to suppress tinting, the heating is preferably performed under an inert atmosphere such as nitrogen.

<Polyimide film>

When a composition according to the present invention is used to form a polyimide film and the polyimide film is used, the polyimide film has a thickness of ordinarily 1 μm or more, preferably 2 μm or more, and ordinarily 300 μm or less, preferably 200 μm or less. When the thickness is 1 μm or more, the polyimide film tends to become a self-supporting film having sufficient strength and have improved handleability. When the thickness is set at 300 μm or less, uniformity of the film tends to be ensured.

The polyimide film, which is provided so as to have performance depending on the application, preferably has the following mechanical strength.

The tensile elastic modulus of the polyimide film is not particularly limited, but is, from the viewpoint of abrasion resistance, preferably 2000 MPa or more, more preferably 2500 MPa or more, still more preferably 3000 MPa or more, particularly preferably 3500 MPa or more, and is, on the other hand, from the viewpoint of bending resistance, preferably 10 GPa or less, more preferably 5000 MPa or less.

The tensile elongation of the polyimide film is not particularly limited, but is, from the viewpoint of bending resistance, preferably 20% or more, more preferably 30% or more, still more preferably 50% or more; from the viewpoint of bending conformability, the upper limit is not particularly defined and higher elongation is preferred.

When the polyimide film has both of such a tensile elastic modulus and such a tensile elongation, high elastic modulus and high elongation are both achieved, and the film is suitably applied to various applications such as surface protective layers, substrates for devices, insulating films, or wiring films. When the film is formed so as to satisfy such a tensile elastic modulus and such a tensile elongation, the film is also preferred for an application as a metal cover material described later. For example, the material satisfies bending resistance and abrasion resistance that meet demands in response to recent reduction in the size of and increase in the power of motors.

The tensile elastic modulus and tensile elongation of the polyimide film are measured by methods described later under the heading EXAMPLES.

The polyimide film formed from a composition according to the present invention can be obtained, for example, in the following manner: as described above, a composition according to the present invention is applied to a substrate serving as a support, and subsequently heated; and the film is removed from the support.

The process of removing the polyimide film from the support is not particularly limited; however, because the removal is achieved without degradation of the performance of the film or the like, preferred are a process of performing physical removal and a process of performing removal using a laser.

Examples of the process of performing physical removal include a process of cutting the periphery of the laminate of the polyimide film/support to obtain the polyimide film, a process of suctioning the peripheral region to obtain the polyimide film, and a process of fixing the periphery and moving the support to obtain the polyimide film.

<Polyimide laminate>

As described above, a composition according to the present invention is applied to a substrate, subsequently heated to form a polyimide film on the substrate; and the film in this state without being removed is integrated with the substrate to provide a polyimide laminate.

The substrate is preferably hard and has heat resistance. In other words, a material that does not deform under temperature conditions required during production steps is preferably employed. Specifically, a material having a glass transition temperature of ordinarily 200°C or more, preferably 250°C or more, preferably forms the substrate. Examples of such substrates include glass, ceramic, metal, and silicon wafers.

In the case of using, as the substrate, a glass, the glass employed is not particularly limited; examples include float glass (alkali glass), high silica glass, soda-lime glass, lead glass, aluminoborosilicate glass, non-alkali glass (borosilicate glass such as EAGLE XG manufactured by Corning Incorporated), and aluminosilicate glass.

In the case of using, as the substrate, a metal, the metal employed is not particularly limited; examples include gold, silver, copper, aluminum, and iron. Alternatively, various alloys of these may be employed.

The shape of the substrate is not particularly limited, and may be a film or sheet shape or a plate shape; in this case, the substrate may have a flat surface, a curved surface, or a stepped portion. Alternatively, the substrate may have a linear shape or a rod shape.

The film-formation form of the polyimide resin cover on such a substrate is not particularly limited, and the formation can be appropriately achieved in accordance with the shape of the substrate or the application. For example, all surfaces, a single surface, both surfaces, or an end surface of the substrate can be covered; all surfaces of or only a portion of the substrate may be covered.

The polyimide resin cover may be a monolayer or a multilayer.

<Metal insulating cover material>

A metal insulating cover material according to the present invention includes a resin layer formed from the above-described composition according to the present invention, and can be suitably used as, particularly because of adhesion, high heat resistance, bending resistance, and furthermore abrasion resistance, an electric wire/cable insulating cover material or an enamel coating material for a low-temperature storage tank, a space heat insulating material, or an integrated circuit, for example.

The type of metal covered with a composition according to the present invention is not particularly limited;

examples include gold, silver, copper, aluminum, iron, and alloys including one or two or more of these metals.

A resin cover layer formed from a composition according to the present invention can be formed as in the above-described method of forming a polyimide film so as to have a thickness of ordinarily about 1 to about 200 μm.

## EXAMPLES

Hereinafter, the present invention will be described further in detail with reference to Examples; however, the present invention within the spirit and scope thereof is not limited to Examples below. In Examples below, the values of various production conditions and evaluation results are meant to be preferred values of the upper limits or lower limits in embodiments according to the present invention; preferred ranges may be ranges defined as combinations of such an upper-limit or lower-limit value and a value in Examples below, or values in Examples.

[Evaluation methods]

Polyimide resin species, compositions, and polyimide films obtained in Examples and Comparative Examples below were evaluated by the following methods.

[Degree of imidization of polyimide resin species]

$^1$H-NMR measurement was performed for a polyimide resin precursor to determine the amounts of amide protons in amic acid moieties and aromatic protons in the main chain skeleton to thereby determine degree of imidization. Specifically, a solution in which the polyimide resin precursor was dissolved in DMSO-$d_6$ containing trimethylsilane (TMS) was used as a sample; TMS was used to provide a reference peak (0 ppm), and the following formula was used to calculate the degree of imidization.

$$\text{Degree of imidization (mol\%)} = (B/2)/A \times 100$$

In the above formula, A represents a value obtained by dividing the integral value of the peak of aromatic protons (7 to 8 ppm) by the number of aromatic protons included in the repeating units of polyamic acid. B represents the integral value of amide protons (10 to 11 ppm) in amic acid structure moieties.

[Viscosity of composition]

An E-type viscometer manufactured by Brookfield, DV-I+, was used to measure rotational viscosity at 30°C.

[Bending resistance (tensile elongation) and abrasion resistance (tensile elastic modulus) of polyimide film]

In accordance with JIS K6301, a test piece of a polyimide film having a strip shape having a width of 9 mm, a length of 80 mm, and a thickness of about 15 μm was subjected to a tensile test using a tensile testing instrument (manufactured by ORIENTEC CORPORATION, product name: "TENSILON STB-1225L") with a gripping distance of 30 mm and at a tensile speed of 10 mm/min. A stress-strain curve was created; a tensile elastic modulus (MPa) was determined; a percentage elongation at break of the test piece was measured to determine tensile elongation (%).

The higher the tensile elastic modulus, the higher the abrasion resistance in evaluation.

The higher the tensile elongation, the higher the flexibility and the higher the bending resistance (bending conformability) in evaluation.

[Heat resistance (glass transition temperature) of polyimide film]

A dynamic thermomechanical spectrometer (manufactured by SII NanoTechnology Inc., DMS/SS6100) was used to measure, under measurement conditions below, the storage elastic modulus and the loss elastic modulus of the sample in response to the vibration load to the sample; on the basis of the loss tangent, glass transition temperature (Tg) was determined. Specifically, for the test piece of the polyimide film, the storage elastic modulus (E') was divided by the loss elastic modulus (E"); for the resultant loss tangent (tanδ), the top of the peak was defined as the glass transition temperature (Tg).

This glass transition temperature (Tg) corresponds to the glass transition temperature (Tg) of the polyimide resin; the higher the Tg, the higher the heat resistance in evaluation.

(DMS measurement conditions)

Measurement temperature range: 30°C to 500°C (heating rate: 5°C/min)

Tensile load: 5 g
Test piece shape: 6 mm × 20 mm

[Adhesion of polyimide film]

On a copper plate of 50 mm × 50 mm × thickness of 0.3 mm, a polyimide film (baked film) was formed; this polyimide film was cut at a pitch of 2 mm to form a lattice pattern of 25 squares (5 × 5); a cupping test machine (manufactured by COTEC CORPORATION, KT-SP4305) was used to examine adhesion between the copper plate and the polyimide film under measurement conditions below. The test was performed four times; after the test, cases where one or more squares of the polyimide film completely separated from the copper plate were evaluated as poor adhesion "NG", and the other cases were evaluated as good adhesion "good".

(Cupping test measurement conditions)

Measurement speed: 0.2 mm/s
Indentation distance: 9 mm
Test piece shape: 50 mm × 50 mm

[Raw materials used]

Raw materials used for producing compositions in Examples and Comparative Examples are as follows.

3,3',4,4'-Biphenyltetracarboxylic dianhydride (BPDA): manufactured by Mitsubishi Chemical Corporation
3,3',4,4'-Benzophenonetetracarboxylic dianhydride (BTDA): manufactured by Tokyo Chemical Industry Co., Ltd.
4,4'-Diaminodiphenyl ether (ODA): manufactured by Wakayama Seika Kogyo Co., Ltd.
4,4'-Diaminobenzanilide (DABA): manufactured by Wakayama Seika Kogyo Co., Ltd.
3,3'-Dihydroxybenzidine (DHB): manufactured by Wakayama Seika Kogyo Co., Ltd.
N,N'-Bis-(4-aminophenyl)terephthalamide (DATA): manufactured by Wakayama Seika Kogyo Co., Ltd.
4,4'-Diaminodiphenyl sulfone (ASN): manufactured by Wakayama Seika Kogyo Co., Ltd.
N,N-Dimethylacetamide(DMAc) (boiling point: 165°C): manufactured by MITSUBISHI GAS CHEMICAL COMPANY, INC.
Polyvinylpyrrolidone K-30 (PVP K-30, molecular weight: 45,000): manufactured by DAI-ICHI KOGYO SEIYAKU CO., LTD.
N,N-Dimethylethanolamine (DMEA): manufactured by Tokyo Chemical Industry Co., Ltd.
Methanol: manufactured by Wako Pure Chemical Industries, Ltd.

[Synthesis Examples, Examples, and Comparative Examples]

[Synthesis of polyimide resin species]

<Synthesis Example 1>

To a four-neck flask equipped with a nitrogen gas inlet, a condenser, and a stirrer, 57.6 parts by weight of BPDA, 0.37 parts by weight of methanol, 0.03 parts by weight of DMEA, and 243 parts by weight of DMAc were added and, under stirring, caused to react at 70°C for 2 hours. 35.3 parts by weight of ODA, 4.4 parts by weight of DABA, and 190 parts by weight of DMAc were further added, and caused to react at 80°C for 4 hours to obtain Polyimide resin species 1 having a solid content concentration of 18 wt%.

Note that the "solid content concentration" used herein corresponds to the polyimide-resin-species concentration, and is a value calculated from the charging amounts. The same applies to the following Synthesis Examples.

<Synthesis Example 2>

To a four-neck flask equipped with a nitrogen gas inlet, a condenser, and a stirrer, 57.9 parts by weight of BPDA, 0.18 parts by weight of methanol, 0.016 parts by weight of DMEA, and 257 parts by weight of DMAc were added and, under stirring, caused to react at 70°C for 2 hours. 29.6 parts by weight of ODA, 11.2 parts by weight of DABA, and 186 parts by weight of DMAc were further added, and caused to react at 80°C for 4 hours to obtain Polyimide resin species 2 having a solid content concentration of 18 wt%.

<Synthesis Example 3>

The same reaction as in Synthesis Example 2 was performed except that the amount of methanol used was changed to 0.37 parts by weight, and the amount of DMEA used was changed to 0.032 parts by weight, to obtain Polyimide resin species 3 having a solid content concentration of 18 wt%.

<Synthesis Example 4>

To a four-neck flask equipped with a nitrogen gas inlet, a condenser, and a stirrer, 57.0 parts by weight of BPDA, 0.37 parts by weight of methanol, 0.03 parts by weight of DMEA, and 257 parts by weight of DMAc were added and, under stirring, caused to react at 70°C for 2 hours. 27.2 parts by weight of ODA, 13.2 parts by weight of DABA, and 187 parts by weight of DMAc were further added, and caused to react at 80°C for 4 hours, to obtain Polyimide resin species 4 having a solid content concentration of 18 wt%.

<Synthesis Example 5>

The same reaction as in Synthesis Example 4 was performed except that the amount of methanol used was changed to 0.43 parts by weight, the amount of DMEA used was changed to 0.037 parts by weight, and the solid content concentration was changed to 25 wt%, to obtain Polyimide resin species 5.

<Synthesis Example 6>

The same reaction as in Synthesis Example 4 was performed except that the amount of methanol used was changed to 0.49 parts by weight, the amount of DMEA used was changed to 0.042 parts by weight, and the solid content concentration was changed to 25 wt%, to obtain Polyimide resin species 6.

<Synthesis Example 7>

The same reaction as in Synthesis Example 4 was performed except that the amount of methanol used was changed to 0.55 parts by weight, the amount of DMEA used was changed to 0.047 parts by weight, and the solid content concentration was changed to 25 wt%, to obtain Polyimide resin species 7.

<Synthesis Example 8>

To a four-neck flask equipped with a nitrogen gas inlet, a condenser, and a stirrer, 57.0 parts by weight of BPDA, 0.37 parts by weight of methanol, 0.03 parts by weight of DMEA, and 173 parts by weight of DMAc were added and, under stirring, caused to react at 70°C for 2 hours. 23.1 parts by weight of ODA, 17.5 parts by weight of DABA, and 106 parts by weight of DMAc were further added, and caused to react at 80°C for 4 hours, to obtain Polyimide resin species 8 having a solid content concentration of 25 wt%.

<Synthesis Example 9>

To a four-neck flask equipped with a nitrogen gas inlet, a condenser, and a stirrer, 57.6 parts by weight of BPDA, 0.40 parts by weight of methanol, 0.02 parts by weight of DMEA, and 176 parts by weight of DMAc were added and, under stirring, caused to react at 70°C for 2 hours. 35.3 parts by weight of ODA, 4.2 parts by weight of DHB, and 102 parts by weight of DMAc were further added, and caused to react at 80°C for 4 hours, to obtain Polyimide resin species 9 having a solid content concentration 25 wt%.

<Synthesis Example 10>

To a four-neck flask equipped with a nitrogen gas inlet, a condenser, and a stirrer, 58.3 parts by weight of BPDA, 30.3 parts by weight of ODA, 11.5 parts by weight of DABA, and 455 parts by weight of DMAc were added. This mixture was heated under stirring, and caused to react at 80°C for 6 hours, to obtain Polyimide resin species 10 having a solid content concentration of 18 wt%.

<Synthesis Example 11>

To a four-neck flask equipped with a nitrogen gas inlet, a condenser, and a stirrer, 54.0 parts by weight of BPDA, 0.35 parts by weight of methanol, 0.02 parts by weight of DMEA, and 153 parts by weight of DMAc were added and, under stirring, caused to react at 70°C for 2 hours. 27.6 parts by weight of ODA, 15.9 parts by weight of DATA, and 127 parts by weight of DMAc were further added, and caused to react at 80°C for 4 hours, to obtain Polyimide resin species 11 having a solid content concentration of 25 wt%.

<Synthesis Example 12>

To a four-neck flask equipped with a nitrogen gas inlet, a condenser, and a stirrer, 56.6 parts by weight of BPDA, 0.37 parts by weight of methanol, 0.03 parts by weight of DMAP, and 160 parts by weight of DMAc were added and, under stirring, caused to react at 70°C for 2 hours. 28.9 parts by weight of ODA, 11.9 parts by weight of ASN, and 120 parts by weight of DMAc were further added, and caused to react at 80°C for 4 hours, to obtain Polyimide resin species 12 having a solid content concentration of 25 wt%.

<Synthesis Example 13>

To a four-neck flask equipped with a nitrogen gas inlet, a condenser, and a stirrer, 42.8 parts by weight of BPDA, 15.6 parts by weight of BTDA, 0.37 parts by weight of methanol, 0.03 parts by weight of DMAP, and 162 parts by weight of DMAc were added and, under stirring, caused to react at 70°C for 2 hours. 38.9 parts by weight of ODA and 121 parts by weight of DMAc were further added, and caused to react at 80°C for 4 hours, to obtain Polyimide resin species 13 having a solid content concentration of 25 wt%.

For Polyimide resin species 1 to 13 obtained in Synthesis Examples 1 to 13, the synthesis conditions, evaluation results, and the like are described in Table 1. Note that, in Table 1, the hydrogen-bond-forming monomer introduction amounts are values determined on the basis of the charging amounts.

[Table 1]

| Polyimide resin species | Formula | Hydrogen-bond-forming monomer introduction amount [mol%] | Alcohol [parts by weight] | Solid content concentration [wt%] | Degree of imidization [mol%] |
|---|---|---|---|---|---|
| 1 | BPDA/ODA/DABA | 10 | 0.37 | 18 | 9.3 |
| 2 | BPDA/ODA/DABA | 25 | 0.18 | 18 | 13 |
| 3 | BPDA/ODA/DABA | 25 | 0.37 | 18 | 13 |
| 4 | BPDA/ODA/DABA | 30 | 0.37 | 18 | 14 |
| 5 | BPDA/ODA/DABA | 25 | 0.43 | 25 | 18 |
| 6 | BPDA/ODA/DABA | 25 | 0.49 | 25 | 18 |
| 7 | BPDA/ODA/DABA | 25 | 0.55 | 25 | 23 |

(continued)

| Polyimide resin species | Formula | Hydrogen-bond-forming monomer introduction amount [mol%] | Alcohol [parts by weight] | Solid content concentration [wt%] | Degree of imidization [mol%] |
|---|---|---|---|---|---|
| 8 | BPDA/ODA/ DABA | 40 | 0.37 | 25 | 27 |
| 9 | BPDA/ODA/DHB | 10 | 0.40 | 25 | 24 |
| 10 | BPDA/ODA/ DABA | 25 | 0 | 18 | 12 |
| 11 | BPDA/ODA/ DATA | 25 | 0.35 | 25 | 24.5 |
| 12 | BPDA/ODA/ASN | 0 | 0.37 | 25 | 14 |
| 13 | BPDA/ BTDA/ODA | 0 | 0.37 | 25 | 24 |

[Preparation of compositions]

In accordance with the mixing formulas in Table 2, Compositions PI-1 to PI-13 were prepared. Note that, in Table 2, the amounts of components used are described in parts by weight of solid content.

The viscosities of the prepared compositions were measured by the above-described method, and the results are described in Table 2. In such a composition, the additive was adjusted such that the polyimide-resin-species concentration became the concentration in Table 2.

[Preparation of polyimide films for evaluation of bending resistance, abrasion resistance, and heat resistance]

Each of the compositions of PI-1 to PI-13 was applied to a glass plate using a spin coater, and heated to cure on a hot plate at 500°C for 6 minutes; subsequently, the laminate of the glass plate-polyimide resin cover was taken out from the drying oven. After the laminate was returned to room temperature, the laminate was immersed in hot water at 90°C to divide it into the glass and the polyimide film.

For such polyimide films obtained, evaluation results in terms of bending resistance, abrasion resistance, and heat resistance are described in Table 2.

[Preparation of laminates for evaluation of adhesion]

The compositions of PI-1, PI-3, PI-4, PI-6, PI-9, PI-10, and PI-11 were applied to copper plates using a spin coater, and heated to cure on a hot plate at 500°C for 6 minutes; subsequently, the laminates of the copper plate-polyimide resin cover were taken out from the drying oven. The laminates were returned to room temperature, and then evaluated for adhesion. The results are described in Table 2.

[Table 2]

| | Composition | | | | | | | Evaluation results of polyimide film | | | |
|---|---|---|---|---|---|---|---|---|---|---|---|
| | Type | Polyimide resin species | | Additive | | Polyimide-resin-species concentration [wt%] | Viscosity [cP] | Tensile elastic modulus [MPa] | Tensile elongation [%] | Tg [°C] | Adhesion |
| | | Type | Amount of use [parts by weight] | Type | Amount of addition [parts by weight] | | | | | | |
| Example 1 | PI-1 | 1 | 100 | PVP K-30 | 0.5 | 18 | 813 | 3790 | 64 | 281 | good |
| Example 2 | PI-2 | 2 | 100 | PVP K-30 | 0.5 | 18 | 6000 | 3500 | 56 | 301 | - |
| Example 3 | PI-3 | 3 | 100 | PVP K-30 | 0.5 | 18 | 856 | 3700 | 63 | 301 | good |
| Example 4 | PI-4 | 4 | 100 | PVP K-30 | 0.5 | 18 | 840 | 3700 | 50 | 311 | good |
| Example 5 | PI-5 | 5 | 100 | PVP K-30 | 0.5 | 25 | 4450 | 3000 | 82 | 300 | - |
| Example 6 | PI-6 | 6 | 100 | PVP K-30 | 0.5 | 25 | 2660 | 3200 | 65 | 300 | good |
| Example 7 | PI-7 | 7 | 100 | PVP K-30 | 0.5 | 25 | 1880 | 3000 | 67 | 300 | - |
| Example 8 | PI-8 | 8 | 100 | PVP K-30 | 0.5 | 25 | 1600 | 3000 | 48 | 302 | - |
| Example 9 | PI-9 | 9 | 100 | PVP K-30 | 0.5 | 25 | 626 | 2800 | 76 | 294 | good |
| Comparative Example 1 | PI-10 | 10 | 100 | PVP K-30 | 0.5 | 18 | 13500 | 3800 | 64 | 301 | good |
| Comparative Example 2 | PI-11 | 11 | 100 | PVP K-30 | 0.5 | 25 | 1600 | 3500 | 16 | 314 | NG |
| Comparative Example 3 | PI-12 | 12 | 100 | PVP K-30 | 0.5 | 25 | 1200 | 2500 | 19 | 324 | - |
| Comparative Example 4 | PI-13 | 13 | 100 | PVP K-30 | 0.5 | 25 | 250 | 2400 | 20 | 295 | - |

The above-described results have demonstrated the following: the compositions of Examples 1 to 9 provide polyimide resin covers that have high heat resistance and are excellent in terms of mechanical properties and adhesion; in addition, the compositions of Examples 1 to 9 can be prepared to have polyimide-resin-species concentrations of 15 wt% or more and 40 wt% or less for providing high workability, and to have low viscosities of 10,000 cP or less.

By contrast, the composition of Polyimide resin species 10 of Comparative Example 1, in which alcohol is not added and the ring-opening reaction of acid anhydride is not caused, has high viscosity, hence poor workability. Polyimide resin species 11 used in Comparative Example 2, in which the hydrogen-bond-forming monomer is introduced, but the hydrogen-bond-forming monomer employed has two linking groups including an active hydrogen (-C(O)NH-), is not within the scope of the present invention; this composition has low tensile elongation and insufficient bending resistance, and does not exhibit adhesion. Polyimide resin species 12 and 13 used in Comparative Examples 3 and 4, which do not include hydrogen-bond-forming monomers introduced, have low tensile elongations and lower tensile elastic moduli than the other compositions, hence insufficient mechanical properties.

The present invention has been described so far in detail with reference to the specific embodiments; however, various changes can be made without departing from the spirit and scope of the present invention, which is apparent to those skilled in the art.

This application is based on Japanese Patent No. 2019-013345 filed January 29, 2019, and the content of which is incorporated by reference herein in its entirety.

## Claims

**1.** A composition comprising a solvent and a polyimide resin precursor and/or polyimide resin,

wherein the polyimide resin precursor and/or polyimide resin includes
a compound represented by Formula (0) below and/or a compound represented by Formula (0') below, and
a compound including a functional group that reacts with a terminally cyclized product of the compound represented by Formula (0) below and/or the compound represented by Formula (0') below,

[Chem. 1]

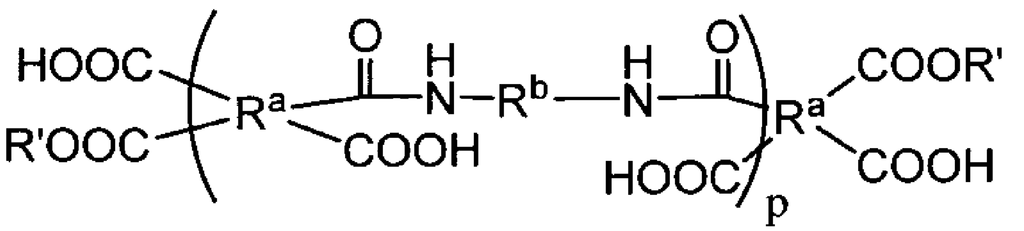

(0)

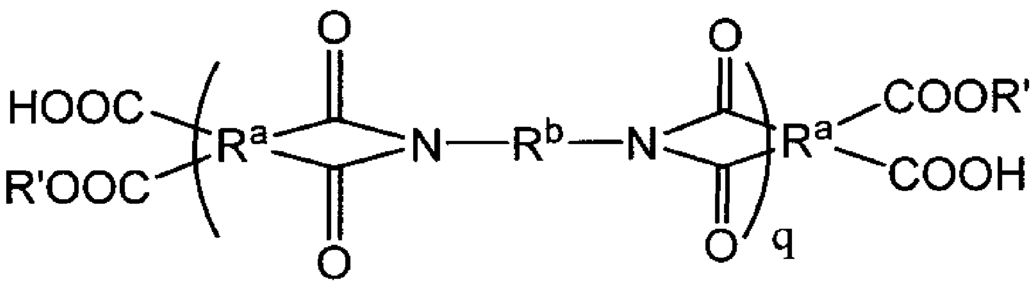

(0')

in Formula (0) and Formula (0') above,

R' each independently represent a hydrogen atom or an alkyl group,
$R^a$ represents a tetracarboxylic acid residue,
$R^b$ represents a diamine residue,
$R^a$ and/or $R^b$ includes one linking group including an active hydrogen and/or one or more and four or less substituents including an active hydrogen, and

p and q represent given integers.

2. The composition according to Claim 1, wherein the solvent has a boiling point of 120°C or more.

3. The composition according to Claim 1 or 2, wherein a concentration of the polyimide resin precursor and/or polyimide resin in the composition is 15 wt% or more and 40 wt% or less.

4. The composition according to any one of Claims 1 to 3, wherein the polyimide resin precursor and/or polyimide resin includes at least one of a structural unit represented by Formula (1) below or a structural unit represented by Formula (2) below:

[Chem. 2]

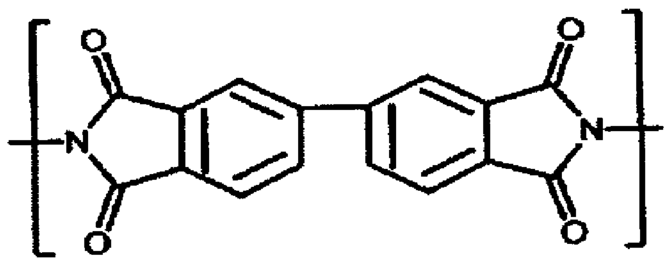

(1)

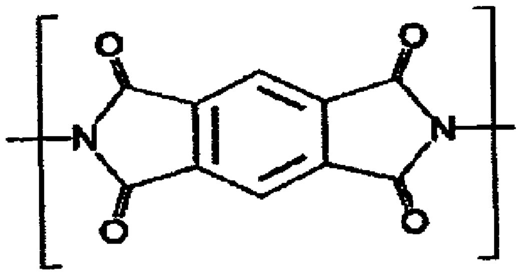

(2)

5. The composition according to any one of Claims 1 to 4, wherein the polyimide resin precursor and/or polyimide resin includes a structural unit represented by Formula (3) below:

[Chem. 3]

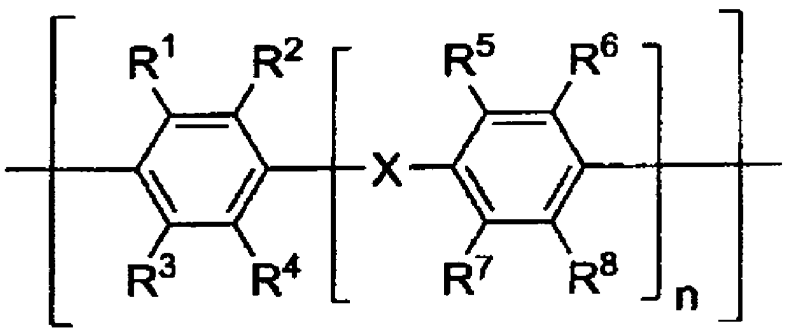

(3)

in Formula (3) above,

$R^1$ to $R^8$ may be the same or different, and are each a hydrogen atom, an alkyl group having 1 or more and 4 or less carbon atoms, a fluoroalkyl group having 1 or more and 4 or less carbon atoms, or a hydroxy group,

X is a direct bond, an oxygen atom, a sulfur atom, an alkylene group having 1 or more and 4 or less carbon atoms, a sulfonyl group, a sulfinyl group, a sulfide group, a carbonyl group, an amide group, an ester group, or a secondary amino group, and
n is an integer of 0 to 4.

**6.** The composition according to any one of Claims 1 to 5, wherein the linking group including an active hydrogen or the substituents including an active hydrogen are a structure selected from the group consisting of -NH-, =NH, -C(O)NH-, -NHC(O)O-, -NHC(O)NH-, -NHC(S)NH-, $-NH_2$, -OH, - C(O)OH, -SH, -C(O)N(OH)-, and -C(O)SH.

**7.** The composition according to Claim 6, wherein the linking group including an active hydrogen or the substituents including an active hydrogen are a structure selected from the group consisting of -C(O)NH-, -NHC(O)NH-, and -OH.

**8.** The composition according to any one of Claims 1 to 7, wherein a baked film of the composition has a glass transition temperature (Tg) of 250°C or more and 400°C or less.

**9.** The composition according to any one of Claims 1 to 8, wherein the composition has a viscosity of 10,000 cP or less.

**10.** A metal insulating cover material comprising a resin layer formed from the composition according to any one of Claims 1 to 9.

**11.** A method for producing a metal insulating cover material, the method comprising a step of covering metal with the composition according to any one of Claims 1 to 9.

**INTERNATIONAL SEARCH REPORT**

International application No. PCT/JP2020/002988

A. CLASSIFICATION OF SUBJECT MATTER

Int. Cl. G08G73/10(2006.01)i, C09D5/25(2006.01)i, C09D179/08(2006.01)i, H01B3/30(2006.01)i, C08L79/08(2006.01)i

FI: C08G73/10, H01B3/30 D, H01B3/30 M, C09D5/25, C09D179/08 Z, C08L79/08 A

According to International Patent Classification (IPC) or to both national classification and IPC

B. FIELDS SEARCHED

Minimum documentation searched (classification system followed by classification symbols)

Int. Cl. G08G73/10, C09D5/25, C09D179/08, H01B3/30, C08L79/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 46-030499 B1 (TORAY INDUSTRIES, INC.) 04 September 1971, column 7, line 9 to column 8, line 32, column 14, line 21 to line 37, column 14, line 41 to column 16, line 21, column 16, line 34 to column 17, line 12, example 16 | 1-4, 6-11<br>5 |
| Y | JP 2017-188438 A (MITSUBISHI CHEM HOLDINGS CORP.) 12 October 2017, claims 1, 3-8, 10, paragraphs [0006], [0073]-[0083], [0102], examples | 1-11 |
| Y | JP 2016-151020 A (HITACHI METALS, LTD.) 22 August 2016, claims 1, 3, 7, paragraphs [0009], [0010], examples | 1-11 |

☒ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 11.03.2020 | 24.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## INTERNATIONAL SEARCH REPORT

International application No.
PCT/JP2020/002988

C (Continuation). DOCUMENTS CONSIDERED TO BE RELEVANT

| Category* | Citation of document, with indication, where appropriate, of the relevant passages | Relevant to claim No. |
|---|---|---|
| Y | JP 05-230419 A (SUMITOMO ELECTRIC INDUSTRIES, LTD.) 07 September 1993, claim 1, paragraphs [0006], [0016], [0018], examples | 1-11 |
| A | JP 2000-319421 A (KANEKA CORP.) 21 November 2000, claim 1, paragraph [0003], examples | 1-11 |
| A | JP 2001-031764 A (UNITIKA LTD.) 06 February 2001, claim 1, paragraph [0013], examples | 1-11 |

Form PCT/ISA/210 (continuation of second sheet) (January 2015)

**INTERNATIONAL SEARCH REPORT**
Information on patent family members

International application No.
PCT/JP2020/002988

| Patent Documents referred to in the Report | Publication Date | Patent Family | Publication Date |
|---|---|---|---|
| JP 46-030499 B1 | 04.09.1971 | (Family: none) | |
| JP 2017-188438 A | 12.10.2017 | US 2019/031844 A1<br>claims 1, 3-8, 10, paragraphs [0008], [0063]-[0074], [0106], examples<br>WO 2017/169880 A1<br>EP 3438992 A1<br>TW 201807066 A<br>CN 108885920 A<br>KR 10-2018-0129796 A | |
| JP 2016-151020 A | 22.08.2016 | (Family: none) | |
| JP 05-230419 A | 07.09.1993 | (Family: none) | |
| JP 2000-319421 A | 21.11.2000 | (Family: none) | |
| JP 2001-031764 A | 06.02.2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9137118 A
- JP 2011029100 A
- JP 2019013345 A